# EUROPÄISCHE PATENTANMELDUNG

(11) **EP 3 683 746 A1**
(43) Veröffentlichungstag der Anmeldung: **22.07.2020**
(21) Anmeldenummer: 20151976.6
(22) Anmeldetag: 15.01.2020
(51) Int. Cl.: G06Q 10/08, G01S 1/02, G08B 13/00, G08B 25/00

(54) **ORTUNGSSYSTEM UND VERFAHREN ZUR ORTUNG EINES BEACONS**

(30) Priorität: 15.01.2019 DE 102019100958
(71) Anmelder: GlobeData GmbH, 5026 Salzburg (AT)
(72) Erfinder: EDER, Peter, 5020 Salzburg (AT)
(74) Vertreter: HGF

(57) **Zusammenfassung**

Die Erfindung betrifft ein Ortungssystem, das einen Beacon-Server (2) und ein oder mehrere Transponder (5), die einen Empfänger aufweisen, der ein von einem Beacon (1) gesendetes Beacon-Funksignal empfangen kann, umfasst. Die Transponder (5) sind zum Empfangen eines Beacon-Funksignals, zum Extrahieren eines für den Beacon (1) charakteristischen Beacon-Codes aus dem Funksignal und zum Übermitteln des Beacon-Codes über eine Datenverbindung (6) an den Beacon-Server (2) ausgebildet. Der Beacon-Server (2) ist zum Überprüfen des von einem der Transponder (5) übermittelten Beacon-Codes ausgebildet, dahingehend, ob dieser Beacon-Code in einer Beacon-Liste enthalten ist. In der Beacon-Liste sind gesuchte Beacon-Codes zusammen mit einer elektronischen Sucher-Adresse eines Suchers verknüpft. An die Sucher-Adresse übermittelt der Beacon-Server (2) automatisch eine Nachricht, dass der entsprechende Beacon-Code erfasst worden ist, falls ein in der Liste enthaltener Beacon-Code von einem der Transponder (5) an den Beacon-Server (2) übermittelt wird. Insbesondere ist der Beacon-Server (2) dazu ausgebildet, nach dem Feststellen, dass der übermittelte Beacon-Code ein gesuchter Beacon-Code ist, auf eine vom Sucher erteilte Freigabe Kontaktinformationen des Suchers an das Mobilgerät (5)zu übermitteln, das den gesuchten Beacon-Code erfasst hat.

## Beschreibung

Die Erfindung betrifft ein Ortungssystem und Verfahren zur Ortung eines Beacons.

Seit einiger Zeit sind am Markt Beacons bzw. Beacon-Chips bekannt, die ein Funksignal periodisch ausstrahlen, das in einem Nahfeldbereich von bis zu 10 m und sogar bis zu 30 m empfangbar ist. Solche Beacons umfassen einen Funksender mit Antenne, eine Steuervorrichtung, wie einen Mikroprozessor, und als Stromversorgung in der Regel eine Knopfzelle. Üblicherweise ist der Funksender dazu ausgebildet, Funksignale nach dem Bluetooth-Standard, insbesondere nach dem Bluetooth LE-Standard, zu senden. Bedingt durch einen recht geringen Stromverbrauch in Verbindung mit einer kurzzeitigen, periodisch wiederkehrenden Ausstrahlung der Funksignale, wobei eine Periodendauer typischerweise bis zu 1 min. und sogar bis zu 10 min. betragen kann, werden lange Betriebszeiten von bis zu einem Jahr und länger erreicht. Durch ein Empfangen des periodisch ausgestrahlten Funksignals lässt sich der Eintritt in Nahfeldbereich des Beacons detektieren und somit eine ungefähre Ortung des Beacons ermöglichen. Aufgrund der geringen Baugröße lassen sich derartige Beacons bzw. Beacon-Chips einfach an Objekten, auch versteckt, anbringen, sodass die mit einem Beacon versehenen Objekte gesucht und auch aufgefunden werden können. Hierbei können die Beacons z.B. an das Objekt geklebt oder mit einem anderen geeigneten Verfahren befestigt werden, bspw. indem ein solches Beacon in ein Armband für Kinder oder in ein Halsband für Tiere eingearbeitet und durch Anlegen desselben an diesen angebracht wird.

Am Markt sind bereits Ortungssysteme zur Ortung eines solchen Beacons bekannt. Ein solches System wird z. B. von dem Unternehmen StickNFind (www.sticknfind.com) angeboten. Hierbei wird dem Sucher über E-Mail eine Nachricht mit dem Ort und der Zeit, an dem das Objekt zuletzt erfasst wurde, übermittelt. Dieses System erlaubt das Auffinden von Objekten, die sich auch in großer Entfernung vom Sucher befinden.

Der Erfindung liegt die Aufgabe zugrunde ein Beacon oder ein mit einem Beacon versehenes Objekt zu finden, wobei der örtliche Bereich in dem der Beacon gesucht wird weitaus größer sein soll als die Reichweite einer Funkverbindung zwischen dem Beacon und einem entsprechenden Empfänger, und, falls ein Beacon gefunden wurde, einen Zugriff auf das gesuchte Objekt zu ermöglichen.

Eine weitere der Erfindung zugrunde liegende Aufgabe ist es, die Position, Richtung und/oder Entfernung zu einem Beacon zu bestimmen.

Eine weitere Aufgabe der Erfindung liegt in der Schaffung eines Verfahrens und einer Vorrichtung zur einfachen und zuverlässigen Verfolgung von Waren.

Die Aufgaben werden durch die Gegenstände der unabhängigen Patentansprüche gelöst. Vorteilhafte Ausgestaltungen sind in den entsprechenden Unteransprüchen enthalten.

Das erfindungsgemäße Ortungssystem, umfasst
einen Beacon-Server und ein oder mehrere Transponder, die einen Empfänger aufweisen, der ein von einem Beacon gesendetes Beacon-Funksignal empfangen kann. Die Transponder sind zum Empfangen eines Beacon-Funksignals und zum Extrahieren eines für den Beacon charakteristischer Beacon-Codes aus dem Funksignal und zum Übermitteln des Beacon-Codes über eine Datenverbindung an den Beacon-Server ausgebildet. Der Beacon-Server ist zum Überprüfen des von einem der Transponder übermittelten Beacon-Codes dahingehend ausgebildet, ob dieser Beacon-Code in einer vorbestimmten Liste enthalten ist.

Der gesuchte Beacon-Codes kann bspw. mit einer elektronischen Sucher-Adresse verknüpft sein, die einen Sucher angibt, der den Beacon sucht und, an welchen eine Nachricht, dass der entsprechende Beacon-Code erfasst worden ist, übermittelt werden soll. Dabei ist der Beacon-Server, falls ein in der Liste enthaltener Beacon-Code von einem der Transponder an den Beacon-Server übermittelt wird, zum automatischen Übermitteln einer solchen Nachricht an die Sucher-Adresse ausgebildet. Insbesondere ist der Beacon-Server dazu ausgebildet, nach dem Feststellen, dass der übermittelte Beacon-Code ein gesuchter Beacon-Code ist, auf eine vom Sucher erteilte Freigabe Kontaktinformationen des Suchers an das Mobilgerät zu übermitteln, das den gesuchten Beacon-Code erfasst hat.

Jemand, der ein Beacon oder ein mit einem Beacon versehenes Objekt sucht, wird im Folgenden als "Sucher" bezeichnet. Ein Sucher kann eine natürliche Person sein oder ein System, das selbständig mehrere Objekte überwacht.

Ein Sucher kann bspw. ein System zum Betreiben eines Fahrradverleihs sein, bei dem die Fahrräder jeweils mit einem Beacon versehen sind und nicht ordnungsgemäße zurückgegebene Fahrräder automatisch gesucht werden. Der Sucher kann den gesuchten Beacon an den Beacon-Server übermitteln, indem der Beacon-Code des Beacons und die elektronische Adresse des Suchers in die Liste eingetragen werden.

Der Begriff "Objekt" bezeichnet nicht nur gesuchte Objekte im eigentlichen Sinne wie Gegenstände, sondern umfasst auch Lebewesen, wie z. B. Kinder oder Haustiere.

Der gesuchte Beacon-Codes kann jedoch auch mit einer Ortsinformation übermittelt werden und dem Sucher kann es genügen zu wissen, wo sich der jeweilige Beacon befindet. Dies gilt bspw. für Organisationen, insbesondere Unternehmen, welche Waren versenden, um bspw. bestimmte Pakete und/oder Container verfolgen, an welchen ein entsprechender Beacon angeordnet ist.

Es können ortsfeste Transponder als auch mobile Transponder vorgesehen sein. Die ortsfesten Transponder weisen einen Speicher auf, in dem der Ort des Beacons gespeichert ist, so dass mit dem von diesem Beacon ausgesendete Beacon-Codes dieser Ort übermittelt wird. Die Transponder können auch mobil ausgebildet sein, wobei solche mobilen Transponder vorzugsweise einen Ortungssensor, insbesondere einen Funk-Ortungssensor, aufweisen, mit welchen der Ort des mobilen Transponders bestimmte werden kann. Vor dem Aussenden des Beacon-Codes wird der Ort des Transponders bestimmt und dieser Ort wird dem Beacon-Code hinzugefügt und mit diesem übertragen und ggfs. in einer Datenbank abgelegt.

Die Ortsangabe des Transponders besteht dabei aus Koordinaten eines Orts, der innerhalb des Nahfeldbereichs des Transponders liegt. Dadurch wird der Beacon-Server ungefähr über den Ort, an dem sich das Beacon und demzufolge auch das gesuchte Objekt befinden, informiert, d.h. der erfassende Transponder befindet sich in der Nähe des Beacons.

Ein Funk-Ortungssensor kann als Satelliten Ortungssensor, wie z.B. als ein Ortungssensor des GPS-Systems oder des Galileo-Systems, oder als Funkpeilsensor zum Peilen des Ortes zu mehreren Funkmasten, bspw. eines Funk-Telefonnetzes, ausgebildet sein.

Der Transponder kann Bestandteil eines Mobiltelefons sein. Der Transponder kann in das Mobiltelefon integriert oder ein separates Erweiterungsmodul sein. Insbesondere kann der Transponder Bestandteil eines Mobiltelefons sein, das eine Funkdatenverbindung, z.B. zum Internet, wie es heutzutage bei allen Smart-Phones bereits Standard ist, und einen Funk-Ortssensor aufweist.

Überdies ist es möglich die Transponder welche in Mobiltelefonen eingebaut sind Relaisstationen für Beacon bereitstellen.

Der Nutzer eines der insbesondere mobilen Transponder, die einen Empfänger aufweisen, der ein von einem Beacon gesendetes Beacon-Funksignal empfangen kann, und dessen Mobilgerät ein gesuchtes Beacon erfasst, wird im Folgenden auch als "Finder" bezeichnet.

Mit dem Beacon-Server ist eine an sich beliebige Zahl von Transpondern verbunden, die erfasste Beacons jeweils an den Beacon-Server übermitteln. Hierdurch ist der örtliche Bereich, in dem ein bestimmter Beacon gesucht wird, nicht auf die Reichweite des Funksignals eines Transponders beschränkt. Durch die Verwendung vieler Transponder erstreckt sich der Suchbereich auf die Orte aller mit dem Beacon-Server kommunizierenden Transponder. Dieser ist praktisch unbegrenzt, wenn die Kommunikation über ein WAN, wie dem Internet, ausgeführt wird.

Auf den Transpondern ist ein Client-Computerprogramm gespeichert und ausführbar, mit welchen die Beacon-Funksignale empfangen werden können, wobei ein für den Beacon charakteristischer Beacon-Code aus den Funksignalen extrahiert und über die Datenverbindung an den Beacon-Server übermittelt wird.

Am Beacon-Server ist ein Server-Computerprogramm gespeichert und ausführbar, mit dem ein von einem der Transponder empfangener Beacon-Code dahingehend überprüft wird, ob dieser Beacon-Code in der Liste enthalten ist, in der gesuchte Beacon-Codes zusammen mit einer elektronischen Sucher-Adresse an welche eine Nachricht, dass der entsprechende Beacon-Code erfasst worden ist, übermittelt werden soll, wobei falls ein in der Liste enthaltener Beacon-Code von einem der Transponder an den Beacon-Server übermittelt wird, eine solche Nachricht automatisch an die Sucher-Adresse übermittelt wird.

Weiter ermöglicht das Server-Computerprogramm nach dem Feststellen, dass der übermittelte Beacon-Code ein gesuchter Beacon-Code ist, auf eine vom Sucher erteilte Freigabe hin, Kontaktinformationen des Suchers an das Mobilgerät des Finders zu übermitteln, das den gesuchten Beacon-Code erfasst hat.

Dadurch wird eine Kontaktaufnahme zwischen dem Sucher und dem Finder initiiert, sodass eine Möglichkeit geschaffen wird, dass der Sucher und der Finder direkt miteinander kommunizieren können. Die direkte Kommunikation ermöglicht dem Sucher, einen mittelbaren Zugriff auf das gesuchte Objekt zu erlangen, und zwar über den Finder.

Unter dem Begriff "Zugriff" ist nicht nur ein im üblichen Sinne physischer Zugriff, wie z. B. ein Festhalten oder ein Ansichnehmen mit dem Zwecke der Ingewahrsamnahme, der Wiederinbesitznahme oder der Sicherstellung des Objektes zu verstehen, sondern auch eine Beweissicherung, wie z. B. durch Fotografieren, Filmen oder Festhalten von schriftlichen Informationen. Durch die Beweissicherung wird ermöglicht, bei einem entwendeten und wiedergefundenen Objekt, den verantwortlichen Täter zu identifizieren. Insbesondere, wenn Objekte aufgrund ihrer Größe, ihrer Beschaffenheit oder ihres Gewichts nicht sofort an sich genommen werden können, ist eine Beweissicherung sinnvoll, um die Auffindesituation zu dokumentieren.

Die mit dem Beacon-Code übermittelte Ortsangabe kann der Beacon-Server an den Sucher weitergeben, so dass der Sucher weitere Maßnahmen ergreifen kann, für deren Durchführung er eine Ortsangabe benötigt, wie z. B. selbsttätige Wiederinbesitznahme oder ein Sicherstellen des gesuchten Objektes durch andere Institutionen, wie Ermittlungsbehörden, Sicherheitsdienste oder (Haus) Detekteien.

In einer weiteren Ausführungsform des erfindungsgemäßen Ortungssystems ist der Beacon-Server dazu ausgebildet, die Kontaktinformationen nach dem Empfang einer Freigabenachricht des Suchers zu übermitteln.

Hierbei werden vom Beacon-Server die Kontaktinformationen des Suchers an das das Beacon erfassende Mobilfunkgerät weitergeleitet, so dass der Finder eine Kontaktaufnahme zwecks direkter Kommunikation mit dem Sucher einleiten kann, wie oben bereits erläutert. Hierzu erteilt der Sucher aus datenschutzrechtlichen Gründen vor Übermittlung der Kontaktinformationen seine Freigabe mittels der Freigabenachricht.

In einer weiteren Ausführungsform des erfindungsgemäßen Ortungssystems ist der Beacon-Server dazu ausgebildet, die vorab auf dem Beacon-Server zusammen mit der Freigabe gespeicherten Kontaktinformationen nach Erhalt des gesuchten Beacon-Codes zu übermitteln.

Hierbei ergibt sich der Vorteil, dass der Sucher bei Eingabe eines gesuchten Beacon-Codes seine Kontaktinformationen zusammen mit der Freigabe für ein Übermitteln seiner Kontaktinformationen bei Initiierung eines Suchauftrags oder während ein Suchauftrag aktiv ist hinterlegen kann, und durch das automatische Übermitteln seiner Kontaktinformationen der Sucher nicht jedes Mal, wenn das gesuchte Beacon erfasst wurde, erneut seine Kontaktinformationen eingeben bzw. freigeben muss. Ein zusätzlicher Vorteil ist hierbei die Beschleunigung der Übermittlung der Kontaktinformationen des Suchers an das erfassende Mobilfunkgerät des Finders.

Vorzugsweise ist ein Bedienercomputer, an dem der Beacon-Code des Beacons gespeichert ist, mit dem Beacon-Server über eine Datenverbindung verbunden und der Bedienercomputer dazu ausgebildet, den gespeicherten Beacon-Code als einen gesuchten Beacon-Code zusammen mit der elektronischen Sucheradresse und/oder der Kontaktinformationen und/oder der Freigabeinformation an den Beacon-Server zu übermitteln.

Vorteilhafterweise wird dadurch eine Verwaltung der Beacon-Codes sowie eine Überwachung gesuchter Beacons bzw. des aktuellen Suchvorgangs am Bedienercomputer möglich, so dass viele verschiedene Beacons gleichzeitig verwaltet werden können. Insbesondere können in Situationen, in denen es auf ein schnelles Einleiten eines Suchvorganges nach einem Beacon bzw. einem Objekt ankommt, durch die vorab gespeicherten Beacon-Codes eine zügige und unkomplizierte Initiierung des Suchvorganges ermöglicht werden.

Da viele verschiedene Beacon-Codes gleichzeitig überwacht werden können, kann das Ortungssystem zum Überwachen des Ortes einer entsprechenden Vielzahl von Objekten eingesetzt werden. Es ist z.B. geeignet, um den Ort von Paketen und/oder Containern zu überwachen. Ein Versender und/oder Zusteller und/oder ein sonstiges Logistikunternehmen kann das Ortungssystem verwenden, um seine Versandeinheiten (Pakete, Container, etc.) zu überwachen.

Hierbei kann auch eine korrekte Abholung und Zustellung automatisch erfasste werden, indem die erfassten Ortsangaben mit dem Abhol- oder Zustellungsort automatisch verglichen werden und bei positiven Ereignissen ein entsprechender Vermerk erzeugt wird, der automatisch abgespeichert oder an eine beteiligte Partei übermittelt wird. Es können auch Zeitfenster vorgegeben sein, innerhalb welcher die Abholung und/oder Zustellung auszuführen ist. Wird keine entsprechende Ortsangabe innerhalb des Zeitfensters erhalten (bei Abholung eine Veränderung der Ortsangabe des Beacons bei Zustellung eine Ortsangabe, welche mit dem Ort der Zustellung übereinstimmt), dann ist dies ein negatives Ereignis, das zur Erzeugung eines entsprechenden Vermerkes führt, der wiederum abgespeichert und/oder übermittelt werden kann.

Es werden aktive und passive Beacons unterschieden. Aktive Beacons sind Beacons, welche eine eigene Energiequelle, insbesondere eine Batterie, wiederaufladbare Akku, Solarzelle oder dgl. aufweisen, und die Energie der Energiequelle verwenden, um ein Beacon-Signal mittels einer Funkverbindung auszusenden und/oder zu empfangen. Die Funkverbindung kann nach einem bekannten Standard (Bluetooth, Bluetooth LE, Zigbee, etc.) ausgebildet sein. Passive Beacons, wie z.B. RFID-Chips, besitzen keine eigene Energiequelle und verwenden die in einem von einem Transponder ausgestrahlten Signal enthaltene Energie, um selbst ein Signal auszusenden. Passive Beacons können nach dem NFC-Standard ausgebildet sein.

Ist die Energiequelle eine wiederaufladbarer Akku, dann kann dieser mit einer induktiven Schnittstelle verbunden sein, um den Akku induktiv laden zu können.

Der Bedienercomputer kann ein stationärer Computer oder ein mobiles Gerät sein, wie es das Mobilgerät ist. Hierbei umfasst ein mobiles Gerät einen Tablet-Computer, ein Smartphone oder eine Smartwatch. Durch das Verwenden eines mobilen Gerätes als Bedienercomputer ist sichergestellt, dass der Sucher, auch wenn er unterwegs ist, einen Suchvorgang nach einem ihm abhanden gekommenen Objekten initiieren und verwalten kann sowie über ein gefundenes Beacon über sein mobiles Gerät informiert werden kann, wie z. B. auf einer Reise bei seinem verlorenen Koffer oder während des Einkaufens bei seinem abhanden gekommenen Kind in einem Einkaufszentrum, Kaufhaus oder Supermarkt.

Ein Verfahren zur Ortung eines Beacons, insbesondere unter Verwendung eines Ortungssystems, wie es oben erläutert ist, umfasst die Schritte:
- Empfangen eines einen Beacon-Code enthaltenden Funksignals von zumindest einem Beacon,
- Extrahieren des Beacon-Codes aus dem Funksignal an einem Transponder,
- Übermitteln des extrahierten Beacon-Codes vom Transponder an einen Beacon-Server,
- Bestimmen am Beacon-Server, ob der übermittelte Beacon-Code einem zu suchenden Beacon-Code eines von einem Sucher gesuchten Beacons entspricht.

Weiterhin kann, wenn der Beacon-Codes mit einem zu suchenden Beacon-Codes übereinstimmt, eine zuvor gespeicherte und mit dem zu suchenden Beacon-Code verknüpften Sucher-Adresse am Beacon-Server ausgelesen werden und eine Nachricht vom Beacon-Server, dass der Beacon-Code erfasst wurde, an den Sucher übermittelt werden, der mit der Sucher-Adresse adressiert werden kann. Auf eine vom Sucher erteilte Freigabe können Kontaktinformationen des Suchers an das Mobilgerät, das den gesuchten Beacon-Code erfasst hat, übermittelt werden.

Vorzugsweise fordert der Beacon-Server, nachdem er einen extrahierten bzw. erfassten Beacon-Code als zu suchenden Beacon-Code bestimmt hat, von dem das Beacon erfassenden Transponder dessen Standort als Ortsangabe an und übermitteln nach Empfang der Ortsangabe diese zusammen mit der Nachricht, dass der Beacon-Code erfasst wurde, an den Sucher.

In einer weiteren Ausführungsform übermittelt der Beacon-Server die Kontaktinformationen nach dem Empfang einer Freigabenachricht des Suchers.

In einer alternativen Ausführungsform übermittelt der Beacon-Server die vorab auf dem Beacon-Server zusammen mit der Freigabe gespeicherten Kontaktinformationen nach Erhalt des gesuchten Beacon-Codes.

Die sich aus dem Verfahren bzw. der weiteren Ausführungsformen des Verfahrens ergebenden Vorteile sind bereits oben erläutert.

Das Verfahren kann dahingehend erweitert werden, dass der Beacon-Server an eine Ermittlungsbehörde und/oder an einen Sicherheitsdienst eine Nachricht, dass der Beacon-Code erfasst wurde, zusammen mit dem Standort und/oder zusammen mit der Kontaktinformation des das Beacon erfassenden Transponders nach Freigabe des Nutzers des erfassenden Transponders übermittelt.

Durch diese automatische Übermittlung an die genannten Institutionen ergibt sich eine kurze Reaktionszeit zum professionellen Zugriff auf das gesuchte Objekt. Hierbei findet vorzugsweise eine Auswahl der dem Objekt nächstgelegenen Institution anhand der Standortdaten statt, so dass die Reaktionswege entsprechend verkürzt werden. Ein weiteres Kriterium für die Auswahl der benachrichtigten Institution ist die Art des Verlustes des Objektes, die Art des gesuchten Objektes und/oder die Dauer seitdem das Objekt vermisst wird. Steht der Verlust des Objekts im Zusammenhang mit einem (vermuteten) Verbrechen, so sollten vorzugsweise Ermittlungsbehörden benachrichtigt werden, während es ansonsten ausreichend sein kann, einen Sicherheitsdienst und/oder (Haus-)Detektei zu benachrichtigen. Während es beispielsweise für ein gestohlenes Fahrrad beim Auffinden dieses Objektes geboten erscheint eine Ermittlungsbehörde einzuschalten, kann es für ein während der Einkaufstätigkeit kurzfristig vermisstes Kind bei dessen Auffinden durchaus ausreichen, einen Sicherheitsdienst und/oder (Haus-)Detektei zu benachrichtigen.

In einer weiteren Ausführungsform des Verfahrens wird der Austausch von Informationen zwischen den beteiligten Kommunikationspartnern, wie Beacon, Beacon-Server, Bedienercomputer, Mobilgerät, Ermittlungsbehörde, Sicherheitsdienst, Hausdetektei und/oder Sucher automatisch und/oder verschlüsselt durchgeführt.

Durch den automatischen Austausch von Informationen ergeben sich kürzere Reaktionswege. Der verschlüsselte Datenaustausch zusammen mit einer Nutzerauthentifizierung ermöglicht eine verbesserte Datensicherheit gegenüber einem nicht verschlüsselten Datenaustausch sowie die Möglichkeit unerwünschte Manipulationen zu unterbinden und den jeweiligen Kommunikationspartner zweifelsfrei identifizieren zu können.

Ein Verfahren zur Ortung eines Beacons in dessen Nahfeldbereich, das mit dem oben erläuterten Verfahren zur Ortung eines Beacons kombiniert oder alternativ zu oder nach diesem ausgeführt werden kann, umfasst die Schritte:
- Empfangen eines einen Beacon-Code enthaltenden Funksignals von zumindest einem Beacon,
- Extrahieren des Beacon-Codes aus dem Funksignal an einem Transponder,
- Ermitteln der Entfernung und/oder der Richtung zum Beacon anhand des empfangenen Funksignals,
- Überprüfen des extrahierten Beacon-Codes am Transponder, ob der übermittelte Beacon-Code einem zu suchenden Beacon-Code eines gesuchten Beacons entspricht, und
- wenn dieses der Fall ist, Bestimmen des Standorts des Beacons bzw. des Transponders.

Das Verfahren zur Ortung eines Beacons in dessen Nahfeldbereich kann mit dem oben erläuterten Ortungssystem ausgeführt werden. Durch Ausführen des Verfahrens kann ein Beacon in seinem Nahfeldbereich genauer geortet werden. Dieses ist insbesondere hilfreich, wenn sich an dem Ort, an dem sich das Objekt befindet, an dem das gesuchte Beacon angebracht ist, eine Vielzahl gleichartiger Objekte wie das gesuchte Objekt befindet. Dieses ist beispielsweise für ein mit einem Beacon versehenen Fahrrad der Fall, das an einem Verkehrsknotenpunkt mit vielen anderen Fahrrädern abgestellt ist, oder bei einem Gepäckstück, das sich mit vielen weiteren Gepäckstücken auf dem Transportweg befindet.

In einer weiteren Ausführungsform des Verfahrens zur Ortung eines Beacons in dessen Nahfeldbereich vereinbaren zumindest zwei Transponder eine gemeinsame Suche nach einem bestimmten Beacon. Die zumindest zwei Transponder ermitteln für ein an einem Sendezeitpunkt ausgestrahltes Funksignal des Beacons die Entfernung und/oder Richtung zum Beacon. Korreliert mit dem Sendezeitpunkt bestimmen die zumindest zwei Transponder die relative Position zueinander. Die ermittelten Messwerte und relativen Positionsdaten werden an zumindest eines der Transponder übermittelt. An zumindest dem einen Transponder wird aus den übermittelten Messwerten und relativen Positionsdaten die relative Position des Beacons, die Entfernung und/oder die Richtung zum Beacon berechnet.

Durch Ausführung dieses erweiterten Verfahrens zur Ortung eines Beacons in dessen Nahfeldbereich wird die Berechnung der Position des Beacons, der Entfernung und/oder der Richtung zum Beacon sehr genau durchgeführt.

Das Ermitteln der Entfernung zwischen den Transpondern und dem Beacon kann mittels einer Feldstärkemessung und/oder einer Laufzeitmessung der Funksignale des Beacons erfolgen. Die Feldstärke des Funksignales des Beacons korreliert mit der Entfernung zum Beacon. Bei der Laufzeitmessung der Funksignale des Beacons wird die Systemzeit der Transponder vor Beginn der Suche nach dem Beacon miteinander synchronisiert, so dass die Differenz der Laufzeit des jeweiligen Funksignales des Beacons dadurch bestimmt werden kann, zu welchem Zeitpunkt das Funksignal des Beacons den jeweiligen Transponder erreicht. Aus den Differenzen der Laufzeitmessungen der Funksignale in Verbindung mit der bekannten relativen Position der Transponder zueinander lässt sich die Entfernung zwischen jedem der Transponder und dem gesuchten Beacon berechnen.

Das Ermitteln der Entfernung zwischen den zumindest zwei Transpondern kann mittels einer Feldstärkemessung und/oder einer Laufzeitmessung von Funksignalen zwischen den Transpondern erfolgen. Alternativ bzw. zusätzlich kann die Entfernung durch eine Positionsbestimmung der Transponder mit Hilfe des Ortungssensors erfolgen. Als Ortungssensor ist insbesondere ein funk-, satelliten- und/oder beacongestützter Ortungssensor geeignet. Die Feldstärkemessung und/oder Laufzeitmessung von Funksignalen zwischen den Transpondern erfolgt so wie oben für Funksignale zwischen dem Beacon und dem Transpondern erläutert. Wird das Verfahren in Bereichen ausgeführt, in denen kein Satellitenempfang möglich ist, wie z. B. in Gebäuden, dann kann ein funkgestützter Ortungssensor zur Positionsbestimmung der Transponder genutzt werden.

Die Bestimmung der relativen Position der Transponder zueinander bzw. des Beacons in Bezug auf zumindest eines der Transponder kann auch durch Ermitteln der absoluten Position bestimmt werden. Insbesondere die oben genannten Ortungssensoren ermöglichen in der Regel eine Bestimmung der absoluten Position.

In einer weiteren Ausführungsform des Verfahrens wird der zeitliche und/oder örtliche Verlauf der Messwerte gespeichert und in die Positions-, Entfernungs- und/oder Richtungsberechnung mit einbezogen.

Dieses ist insbesondere von Vorteil, wenn sich das Beacon stationär an einem Ort befindet und sich die Transponder relativ zum Beacon bewegen. Durch die Auswertung mehrere Messwerte eines jeden einzelnen Transponders werden die daraus berechneten Werte genauer, da die in den Messwerten enthaltenen Fehler sich statistisch gesehen mit größerer Wahrscheinlichkeit gegeneinander aufheben und jeder einzelne Messwert einen geringeren Einfluss auf die berechneten Werte hat.

Vorzugsweise werden in einer weiteren Ausführungsform des Verfahrens an zumindest einem der Transponder für das Beacon Position, Entfernung und/oder Richtung zum Beacon an einer Anzeigeeinrichtung angezeigt. Dieses kann insbesondere unter Berücksichtigung der Orientierung und der Raumlage des Transponders relativ zum Beacon geschehen. Beispielsweise können die Orientierung und die Lage im Raum relativ zum Beacon durch Magnetfeldsensoren, Neigungssensoren und/oder Bewegungssensoren ermittelt werden. Es kann auch ein Richtungspfeil angezeigt werden, der immer in Richtung auf die berechnete Position des Beacons zeigt

Durch eine derartige Anzeige wird es möglich den Nutzer des anzeigenden Transponders unmissverständlich über die Position und/oder Richtung zu informieren..

Das oben genannte Ordnungssystem und das entsprechende Verfahren kann auch zum Verfolgen von Waren, insbesondere zum Verfolgen bestimmter Pakete und/oder Container, verwendet werden. Es gibt sogenannte GPS-Tracker, welche zum Verfolgen von Containern bereits verwendet werden. Diese GPS-Tracker empfangen Satellitensignale, um hieraus ihre Position zu berechnen. Sie weisen eine Sendeeinrichtung auf, um per Funksignal ihre Position an einen vorbestimmten Empfänger zu übermitteln. Diese GPS-Tracker sind aufgrund ihrer aufwändigen Technologie sehr teuer und besitzen aufgrund ihres hohen Energieverbrauches nur eine geringe Lebensdauer von z.B. 3 Monaten. Diese GPS-Tracker haben sich in der Praxis nicht durchgesetzt, um eine grundsätzliche Verfolgung bzw. Überwachung von Container sicherzustellen. Sowohl das Bestimmen des Ortes als auch die Übermittlung der entsprechenden Nachrichten erfordert bei den bekannten GPS-Trackern einen erheblichen technischen Aufwand.

Wird die zu verfolgende Ware hingegen mit einem Beacon versehen, so muss im Beacon selbst kein Ortssensor vorgesehen sein. Der Ort wird am Transponder bestimmt, mit welchem der Beacon kommuniziert.

Die Verwendung passiver Beacon, insbesondere von RFID-Chips, ist in Kaufhäusern zum Sichern von Waren gegen Diebstahl seit langem bekannt und im Einsatz. Entsprechende Transponder sind an den Ausgängen installiert, so dass beim Vorbeiführen eines entsprechenden RFID-Chips dies von den Transpondern festgestellt werden kann und ein Alarm automatisch ausgelöst werden kann.

Will man jedoch den Fluss von Waren überregional verfolgen, dann besteht ein erhebliches Problem, eine entsprechende Infrastruktur bereitzustellen, mit welcher die Beacons ausgelesen werden können.

Den Erfindern ist es gelungen, Beacons auf Grundlage des ZigBee-Standard zu entwickeln, welche mit einer einzigen Batterie über einen längeren Zeitraum betrieben werden können. Dieser Zeitraum kann einige Jahre betragen. Zudem haben diese aktiven Beacons eine Reichweite von einigen 10 m bis zu einigen 100 m, um mit einem Transponder oder einem weiteren Beacon zu kommunizieren. Die Beacon sind vorzugsweise zur Ausführung einer bidirektionalen Kommunikation ausgebildet.

Die Bestimmung des Ortes erfolgt hierbei nicht durch die Beacon selbst, sondern durch die Transponder, welche mit den Beacon kommunizieren. Wie es oben bereits erläutert ist, kann der Ort bei einem ortsfesten Transponder im Transponder gespeichert sein oder bei einem mobilen durch einen Ortssensor bestimmt werden. Es können auch an bestimmten Bereichen mehrere Transponder vorgesehen sein, um durch Laufzeitmessung oder Feldstärkemessungen der Beacon-Signale den relativen Ort der Beacon zueinander zu messen. An Umschlagplätzen, wie Häfen, Flughäfen, Lagerhallen oder dergleichen werden vorzugsweise mehrere Transponder vorgesehen und es wird eine relative Ortsmessung der Beacon zu den jeweiligen Transpondern z. B. mittels Feldstärke- oder Laufzeitmessung durchgeführt. Hierdurch kann z.B. in einem Hafen nicht nur festgestellt werden, dass ein bestimmter Container sich im Hafen befindet, sondern es kann auch der Ort des Containers im Hafen bestimmt werden. Wenn in einem Hafen mehrere hundert oder mehrere tausend Container vorhanden sind, dann kann mittels des Ortungssystems der Ort des Beacons bzw. eines mit dem Beacon versehenen Containers zuverlässig festgestellt werden. Die Transponder selbst sind einfache kostengünstige Geräte, welche eine Sende-/Empfangseinrichtung aufweisen, welche nach demselben Standard wie die jeweiligen Beacons arbeiten und eine Datenverbindung zu einem WAN besitzen, welches insbesondere das Internet ist. Mobile Transponder weisen vorzugsweise einen Ortungssensor auf. Die mobilen Transponder sind vorzugsweise mobile Telefongeräte, welche eine Sende- und Empfangseinrichtung aufweisen, die nach demselben Standard wie die Beacons arbeiten.

Führt zum Beispiel ein Kraftfahrer einen solchen mobilen Transponder mit sich, dann kann die in seinem Lastwagen verladene und jeweils mit einem entsprechenden Beacon versehene Ware mit dem mobilen Transponder von Zeit zu Zeit Nachrichten austauschen, so dass am mobilen Transponder festgestellt wird, dass diese Beacon und damit diese Waren sich in der Nähe des mobilen Transponders befinden. Der mobile Transponder kann jeweils mittels des Ortungssensors zu dem Zeitpunkt, an welchem die entsprechende Nachricht vom Beacon bei ihm eingeht, seinen Ort bestimmen und diesen Ort zusammen mit der Information, dass er eine Nachricht von dem jeweiligen Beacon erhalten hat, an den Beacon-Server über die Datenverbindung übermitteln. Hiermit kann ein Logistikunternehmen mit sehr wenig technischem Aufwand den Ort der jeweiligen Waren regelmäßig erfassen und erhält somit ein Bewegungsprofil der entsprechenden Ware.

Da der Beacon-Code an einen Beacon-Server übermittelt wird, an dem eine Liste vorgehalten wird, in dem Beacon-Codes aufgeführt sind, deren Ort zu erfassen ist, ist es möglich, mit einer Transponder-Infrastruktur gleichzeitig unterschiedliche Überwachungs-Anwendungen auszuführen. An dem Beacon-Server, an den die Beacon-Codes übermittelt werden, können auch mehrere Listen für jeweils unterschiedliche Anwendungen vorhanden sein, wobei je nachdem, in welcher Liste ein eingehender Beacon-Code enthalten ist, ein bestimmter Vorgang automatisch ausgeführt wird. Es kann beispielsweise eine Liste von Beacon-Codes vorgesehen sein, welche gestohlenen Gegenständen zugeordnet sind. Eine weitere Liste kann Beacon-Codes von Containern eines bestimmten Logistik-Unternehmens enthalten. Eine noch weitere Liste kann Beacon-Codes von Paketen eines bestimmten Versandgeschäftes enthalten. Diesen Listen sind unterschiedliche Institutionen bzw. Personen zugeordnet. Diesen Personen wird vom Beacon-Server eine Nachricht mit der Ortsinformation und des jeweiligen Beacon-Codes übermittelt. Hierdurch teilen sich unterschiedliche Anwendungen die Infrastruktur der Transponder, wodurch sich der Aufwand für einen einzelnen, bestimmten Anwender entsprechend verringert. Diese Transponder-Infrastruktur umfasst die Transponder und den bzw. die Beacon-Server, an welchen die Listen der gesuchten bzw. zu überwachenden Beacon vorgehalten werden.

Die Beacon-Server können die den Ort der Beacons enthaltenden Nachrichten somit an unterschiedliche Anwendungsserver von unterschiedlichen Anwendern übermitteln. An den Anwendungsservern stehen somit automatisch die Ortsangaben, in der Regel mit Zeitangaben verknüpft, zur Verfügung. Auf den Anwendungsservern sind die Beacon-Codes mit Beschreibungen von Gegenständen, an welchen die entsprechenden Beacons angeordnet sind, verknüpft. Sind diese Gegenstände bspw. Container, Pakete oder dgl., dann ist am Anwendungsserver jeweils eine Zuordnung des Beacon-Codes zu einer entsprechenden Identifikationsnummer zum Container, Paket oder sonstigen Gegenstand gespeichert. Somit kann der Anwender mittels seines Anwendungsservers den Ort von einer Vielzahl von Gegenständen überregional überwachen.

Es sind zum Beispiel zentrale Paketabgabestellen bekannt, an welchen Pakete von einem Paketdienst in einem verschlossenen Fach hinterlegt werden können und von dem jeweiligen Empfänger abgeholt werden können. Diese Paketabgabestellen können mit einem entsprechenden Transponder ausgerüstet sein, so dass automatisch festgestellt werden kann, wann das entsprechende Paket an der Paketabgabestelle eintrifft und von dort wieder abgeholt werden kann. Vorzugsweise können Verfahren zum Abgeben bzw. Abholen der Pakete an der Paketabgabestation auch mit einer Identifizierungs- und/oder Authentifizierungsmethode verknüpft sein, so dass entweder der das Paket abgebende Zusteller eindeutig identifiziert wird und/oder insbesondere die das Paket abholende Person eindeutig identifiziert und/oder autorisiert wird. Da mittels des Beacons eindeutig feststellbar ist, dass sich das Paket an der zentralen Paketabgabestelle befindet, kann es notwendig sein, sich als Abholer zu autorisieren, um das Paket von der zentralen Paketabgabestelle entfernen zu können. Ansonsten wird beim Entfernen des Paketes ohne vorherige Autorisierung automatisch ein Alarm ausgelöst. Die Autorisierung kann beispielsweise mittels eines mobilen Endgerätes, das über eine Datenverbindung mit einem entsprechenden Anwendungs-Server verbunden ist, ausgeführt werden.

Die Transponder für derartige Paketabgabestellen sind derart einfach und kostengünstig, dass es sinnvoll ist, diese Transponder an allen Stellen vorzusehen, an welchen regelmäßig Pakete abgegeben werden. Dies können sogar Privathaushalte sein, welche regelmäßig ein Paket empfangen. Diese Transponder können zur Kommunikation mit passiven Beacons als auch mit aktiven Beacons ausgebildet sein. Passive Beacons sind wesentlich einfacher und kostengünstiger als aktive Beacon. Damit sie jedoch ausgelesen werden können, müssen die passiven Beacon in unmittelbare Nähe des Transponders gelangen. Der Abstand sollte keinesfalls größer als 10 m sein und es ist oftmals sogar ein Abstand von weniger als 1 m notwendig, um einen passiven Beacon sicher auslesen zu können. Aktive Beacon können jedoch von Transpondern, welche einige 10 m oder sogar einige 100 m entfernt sind, ausgelesen werden. Will man nur den Endpunkt einer Lieferung zuverlässig erfassen, dann genügt ein passiver Beacon. Will man hingegen die Ware während des Transportes immer wieder erfassen, um den tatsächlichen Transportweg verfolgen und nachvollziehen zu können, dann ist die Verwendung eines aktiven Beacons vorzuziehen. Auch wenn ein aktiver Beacon etwas aufwändiger und teurer als ein passiver Beacon ist, kann es auch wirtschaftlich Sinn machen, aktive Beacon zum Verfolgen von Paketen zu verwenden, denn an den Umschlagstationen müssen die einzelnen Pakete nicht unmittelbar an den Transponder herangeführt werden, um festzustellen, dass sie sich in der jeweiligen Umschlagstation bzw. in der Nähe des entsprechenden Transponders befinden. Im Bereich der Umschlagstationen muss deshalb die Ware nur in der Nähe des Transponders vorbeigeführt werden und nicht unmittelbar am Transponder, was technisch wesentlich einfacher ist. Es ist somit möglich, an den Umschlagstationen vollautomatisch den Umschlag der Ware zu verfolgen, sofern die Ware mit einem entsprechenden Beacon versehen ist.

Die aktiven Beacon können im Kreislauf verwendet werden, d.h., dass sie vom Versender in ein Paket gepackt werden und vom Empfänger aus dem Paket genommen werden. Der Transponder des Empfängers erkennt, dass der Beacon in seiner Nähe ist und unterrichtet den Versender. Dies dient nicht nur dazu, die erfolgreiche Zustellung des Paketes zu belegen, sondern auch die Verteilung der Beacons bei den entsprechenden Empfängern zu überwachen und sie bei Bedarf durch einen Zusteller abholen zu lassen. Diese Abholung kann beispielsweise bei der nächsten Zustellung eines Paketes ausgeführt werden.

Daher ist es technisch und wirtschaftlich sinnvoll, solche Transponder an Wareneingangsstellen von Unternehmen und sogar bei privaten Haushalten vorzusehen. Sind in besiedelten Bereichen, insbesondere Städten und Gemeinden, derartige Transponder an mehreren Stellen vorgesehen, dann kann der Durchgang von Waren automatisch erfasst werden. Die Benutzung der Infrastruktur können sich unterschiedliche Anwender teilen, wie es oben ausgeführt ist. Innerhalb eines solchen Transponder-Netzwerkes werden die Beacon-Codes nur mit der jeweiligen Ortsinformation und Zeitinformation verknüpft. Den registrierten Anwendern werden diese Informationen übermittelt. Erst der Anwender kann die Beacon-Codes mit dem tatsächlich von ihm versendeten oder zu überwachenden Gegenstand verknüpfen. Hierdurch sind die Anforderungen an den Datenschutz gewährleistet, denn selbst wenn ein Datendiebstahl erfolgen sollte, kann der Datendieb nur feststellen, dass an bestimmten Orten sich Beacons mit einem bestimmten Beacon-Code befunden haben, jedoch diesen Beacon-Code keinem zu überwachenden Gegenstand zuordnen.

Werden zudem noch Mobiltelefone als Transponder ausgebildet, dann kann sehr kostengünstig eine überregionale Transponderstruktur bereitgestellt werden.

Eine weitere Anwendung kann es sein, bestimmte Gegenstände an vorbestimmten Bereichen zu überwachen. Will man Fahrräder an einem Bahnhof oder vor einem Kino oder Skier vor einer Skihütte abstellen oder Kleidungsgegenstände oder Handtaschen an einer Garderobe abgeben, dann können diese Bereiche mit einem Transponder versehen sein. Die entsprechenden Gegenstände sind mit einem entsprechenden Beacon versehen. Die Inhaber dieses Beacons und damit des entsprechenden Gegenstandes sind als Nutzer in einer Überwachungssoftware registriert. Erkennt die Überwachungssoftware, dass der entsprechende Beacon im Sende- und Empfangsbereich des entsprechenden Transponders sich befindet, dann kann diese Überwachungssoftware Nutzer anfragen, ob der Beacon oder der entsprechende Gegenstand registriert werden soll. Bestätigt dies der Nutzer, dann kann der Beacon bzw. der entsprechende Gegenstand aus dem Bereich des entsprechenden Transponders nur entfernt werden, wenn man sich hierzu vorab mit einem gesonderten Verfahren autorisiert hat. Ansonsten wird beim Entfernen des Gegenstandes ein Alarm ausgelöst. Die zu überwachenden Gegenstände können beispielsweise mittels einer Kamera abgetastet werden. Wird der Gegenstand ohne Autorisierung entfernt, werden die entsprechenden Kamerabilder automatisch an vorab eingestellte Empfänger weitergeleitet, so dass ein unerlaubtes Entwenden des entsprechenden Gegenstandes einfacher aufgeklärt werden kann.

Dieses Verfahren kann auch dahingehend abgewandelt werden, dass die entsprechenden Beacon bzw. Gegenstände automatisch registriert werden, wenn sie sich eine vorbestimmte Zeitdauer im Sende- und Empfangsbereich eines entsprechenden Transponders befinden.

Ein Transponder kann zum Senden und Empfangen von Nachrichten nach zumindest zwei unterschiedlichen Standards ausgebildet sein. Insbesondere ist es zweckmäßig einen Transponder vorzusehen, der eine Sende- und Empfangseinrichtung nach dem NFC-Standard und nach dem ZigBee-Standard aufweist. Ein solcher Transponder kann sowohl mit passiven Beacons als auch mit aktiven Beacons kommunizieren. Dies ist beispielsweise zweckmäßig zur Überwachung von Logistikströmen, wobei beispielsweise Paletten mit passiven Beacons nach dem NFC-Standard und Container mit aktiven Beacons nach dem ZigBee-Standard versehen sind. Die unterschiedlichen Warenströme der Paletten und Container können somit mit den gleichen Transpondern erfasst werden.

Transponder zum Lesen von passiven Beacons müssen sich in unmittelbarer Nähe der passiven Beacons befinden, um diese auslesen zu können. Es kann daher zweckmäßig sein, einen Transponder für passive Beacons mit einem aktiven Beacon zu koppeln, so dass dieser Transponder in die Nähe eines passiven Beacons gebracht werden kann und gleichzeitig mit einem weiter entfernten Transponder mittels des daran gekoppelten aktiven Beacons kommunizieren kann. An Einrichtungen zum Umschlagen von Paletten, wie zum Beispiel Gabelstapler, können Transponder für passive Beacon vorgesehen sein, welche an einen aktiven Beacon gekoppelt sind. Werden mit dem Gabelstapler Paletten aufgenommen, an welchen sich ein passiver Beacon befindet, dann wird dies durch den entsprechenden Transponder festgestellt, die entsprechende Information an den aktiven Beacon weitergegeben, der dies an einen weiter entfernt angeordneten Transponder übermittelt. Mit diesem Transponder können somit indirekt die passiven Beacon als auch weitere aktive Beacon, welche beispielsweise an Containern vorgesehen sind, gleichzeitig erfasst werden.

Ein weiterer Vorteil von aktiven Beacon, welche zur bidirektionalen Datenkommunikation ausgebildet sind, liegt darin, dass diese Beacons untereinander vernetzbar sind. Dies bedeutet, dass die aktiven Beacons untereinander Nachrichten austauschen können. Hierdurch ist es möglich, dass ein aktiver Beacon, der sich außerhalb des Sende- und Empfangsbereichs eines Transponders befindet, jedoch über einen weiteren Beacon, der sich am Rande des Sende- und Empfangsbereiches des Transponders befindet, über diesen Beacon mit dem jeweiligen Transponder kommunizieren kann. Die Kommunikation eines Beacons mit einem Transponder mittels eines weiteren Beacons wird im Folgenden als Relay-Kommunikation bezeichnet. Das Kommunikationssystem der aktiven Beacon ist vorzugsweise ausgebildet, dass ein Beacon lediglich über einen einzigen Pfad mit einem oder mehreren weiteren Beacon mit einem bestimmten Transponder kommunizieren kann, um eine Überbelastung des Netzwerkes zu vermeiden.

Die Erfindung wird im Folgenden anhand der Zeichnungen näher erläutert. Diese zeigen in:
- Fig. 1: schematisch den Aufbau eines Ortungssystems,
- Fig. 2: ein Verfahren zur Ortung eines Beacons in einem Flussdiagramm,
- Fig. 3: ein erweitertes Verfahren zur Ortung eines Beacons in einem Flussdiagramm,
- Fig. 4: ein Verfahren zur Ortung eines Beacons in dessen Nahfeldbereich in einem Flussdiagramm,
- Fig. 5: schematisch eine Darstellung einer Situation in der das Verfahren zur Ortung eines Beacons in dessen Nahfeldbereich ausgeführt wird,
- Fig. 6: schematisch ein aktives Beacon in einem Blockschaltbild,
- Fig. 7: schematisch en Ausschnitt eines überregionalen Ortungssystems in einem Blockschaltbild.

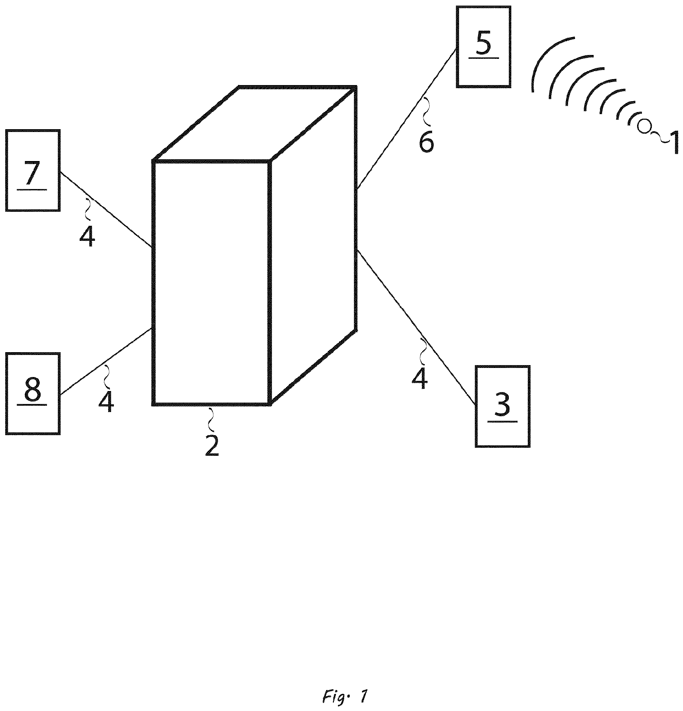

In einem ersten Ausführungsbeispiel eines erfindungsgemäßen Ortungssystems sendet ein Beacon 1 n einem Nahfeldbereich, der bis zu 30 m beträgt, periodisch wiederkehrend, typischerweise in Abständen von bis zu 1 min., ein kurzes Funksignal aus, wobei in dem ausgesendeten Funksignal eine Identifikationskennung, mit der das gesuchte Beacon 1 eindeutig identifizierbar ist, enthalten ist (Fig. 1).

Ein Beacon-Server 2 ist mit einem Bedienercomputer 3, der als ein stationärer Computer oder auch als ein mobiles Gerät, wie z. B. als ein Tabletcomputer, ein Mobiltelefon oder eine Smartwatch ausgebildet sein kann, über eine Datenverbindung 4 verbunden. Am Beacon-Server 2 sind Identifikationsbezeichner, also Beacon-Codes, von gesuchten Beacons 1 in einer Liste zusammen mit einer elektronischen Sucher-Adresse eines Suchers verknüpft gespeichert. Die elektronische Sucher-Adresse ist die Adresse des Suchers, wie z. B. Telefonnummer, E-Mail-Adresse, Messenger-Adresse, an welche eine Nachricht, dass der entsprechende Beacon-Code erfasst worden ist, übermittelt werden soll. Der Beacon-Server 2 dient zum Verwalten der gesuchten Beacon-Codes und der damit verknüpften Informationen.

Über den Bedienercomputer 3 kann ein Bediener Beacon-Codes und die dazugehörige elektronische Sucher-Adresse sowie weitere Informationen, auch über das gesuchte Objekt, wie z. B. Art des Objekts, Farbe, Größe, Form, Abbild (Foto), eindeutige und/oder weitere Merkmale, eingeben und an den Beacon-Server 2 übermitteln. Der Beacon-Server 2 speichert die erhaltenen Daten verknüpft mit dem jeweiligen Beacon-Code.

Die Datenverbindung 4 ist eine mobile oder stationäre Datenverbindung und vorzugsweise eine Internetverbindung. Als stationäre Datenverbindung ist die Datenverbindung 4 über Kabel oder als eine mobile Datenverbindung über eine Funkstrecke realisiert, die vorzugsweise nach einem Funkstandard, wie z. B. WAN, LAN, WLAN, etc., ausgebildet ist.

Das durch das Beacon 1 periodisch ausgesendete Funksignal wird von einem Transponder, der im vorliegenden Ausführungsbeispiel als Mobilgerät 5 ausgebildet ist, erfasst. Das Mobilgerät 5 ist über eine weitere, mobile Datenverbindung 6, die über ein Funksystem betrieben wird, wie oben bereits erläutert, mit dem Beacon-Server 2 verbunden. Dadurch ist das Mobilgerät 5 als mobiles Gerät, das oben erläutert ist, zu nutzen. Das Mobilgerät 5 ist dazu ausgebildet, die vom Beacon 1 ausgesendeten Funksignale in dessen Nahfeldbereich zu empfangen. Empfängt das Mobilgerät 5 ein solches Funksignal, dann extrahiert es aus diesem den Identifikationsbezeichner des Beacon 1, d.h. einen charakteristischen Beacon-Code. Diesen Beacon-Code übermittelt das Mobilgerät 5 über die Datenverbindung 6 an den Beacon-Server 2. Der Beacon-Server 2 überprüft nun den vom Transponder bzw. Mobilgerät 5 erhaltenen Beacon-Code dahingehend, ob dieser in der Liste der gesuchten Beacon-Codes enthalten ist.

Falls der Beacon-Server 2 einen gesuchten Beacon-Code ermittelt, ist er dazu ausgebildet, an die elektronische Sucher-Adresse eine Nachricht zu übermitteln und an das erfassende Mobilgerät 5 des Finders auf eine vom Sucher erteilte Freigabe Kontaktinformationen des Suchers, wie z.B. Telefonnummer, E-Mail-Adresse, Messenger-Adresse. Auf Empfang der übermittelten Kontaktinformationen kann der Finder entscheiden, ob er mit deren Hilfe mit dem Sucher kommunizieren möchte, um diesem einen mittelbaren Zugriff auf das gesuchte Objekt zu ermöglichen.

Zusätzlich kann der Beacon-Server 2 dazu ausgebildet sein, zusammen mit der Kontaktinformation weitere Informationen an den Finder über das gesuchte Objekt, wie z.B. Art des Objekts, Farbe, Größe, Form, Abbild (Foto), eindeutige und/oder weitere Merkmale, zu übermitteln.

Alternativ kann der Beacon-Server 2 auch als ein Verband verteilter Beacon-Server 2 ausgebildet sein. Insbesondere bei einer Ortung über Subnetzwerkgrenzen im Internet und/oder größere Entfernungen zwischen Sucher und Mobilgerät 5 des Finders, wie z.B. über Landesgrenzen und/oder Kontinente hinweg, ist ein solcher Verband verteilter Beacon-Server 2 schneller in der Lage, Informationen zu verarbeiten, da die Kommunikationswege zwischen dem Mobilgerät bzw. Transponder 5 und dem nächsten Beacon-Server 2 kürzer sind.

Vorzugsweise sind die Beacon-Server jedoch so ausgebildet, dass sie Nachrichten an Anwendungsserver übermitteln, die nur den Beacon-Code zusammen mit einer Ortsangabe und/oder Zeitangabe übermitteln, wobei erst am oder an den Anwendungsservern eine Zuordnung der Beacon-Codes zu den zu überwachenden Gegenständen stattfindet.

In einem zweiten Ausführungsbeispiel eines erfindungsgemäßen Ortungssystems sind die Einrichtungen und Geräte des ersten Ausführungsbeispiels vorhanden (Fig. 1). Zusätzlich ist ein Sicherheitsdienstcomputer 7 über eine Datenverbindung 4 mit dem Beacon-Server 2 verbunden. Hierbei wird als Sicherheitsdienst ein Sicherheitsdienst und/oder eine Hausdetektei verstanden. Außerdem ist ein Ermittlungsbehördencomputer 8 über eine weitere Datenverbindung 4 mit dem Beacon-Server 2 verbunden.

Dadurch kann der Beacon-Server 2, wenn ein gesuchtes Beacon 1 von einem Mobilgerät 5 erfasst wurde, an eine Ermittlungsbehörde, an einen Sicherheitsdienst und/oder (Haus-)Detektei eine Nachricht, dass der Beacon-Code erfasst wurde, zusammen mit dem Standort und/oder zusammen mit der Kontaktinformation des das Beacon 1 erfassenden Transponders 5 nach Freigabe des Nutzers des erfassenden Transponders 5 übermitteln. Vorzugsweise ist auf dem Beacon-Server 2 dazu in der Liste der gesuchten Beacon-Codes hinterlegt, ob eine Ermittlungsbehörde und ob ein Sicherheitsdienst bzw. eine (Haus-)Detektei benachrichtigt werden soll. Diese Einstellungen können vom Sucher vorgegeben werden.

Welche dieser Institutionen benachrichtigt wird, hängt mit der Art des Abhandenkommens des mit dem Beacon 1 versehenen gesuchten Objektes zusammen. Ist z.B. das Objekt durch ein (vermutetes) Verbrechen, wie einen Diebstahl, abhandengekommen, so kann eine Ermittlungsbehörde als Nachrichtenempfänger von Sucher vorbestimmt werden. Falls ein Objekt versehentlich abhandengekommen ist bzw. verloren wurde, so kann es ausreichen einen Sicherheitsdienst und/oder eine (Haus-)Detektei zu benachrichtigen, insbesondere in Einkaufszentren, Kaufhäusern und/oder Verkehrsknotenpunkten, wie Bahnhöfen, Flughäfen, etc.

Der Beacon-Server 2 ist vorzugsweise dazu ausgebildet, die am jeweiligen Fundort des Beacons1 zuständige Institution aus einer Vielzahl von Institutionen auszuwählen. Somit kann beispielsweise gezielt ein am Fundort zuständiges Polizeirevier von einem Fund informiert werden.

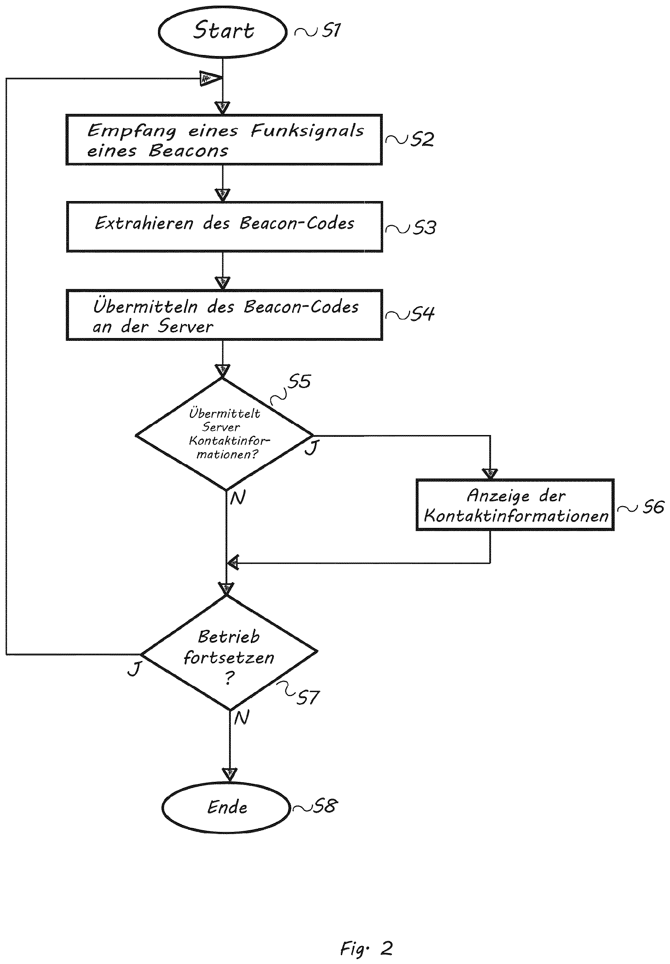

Nachfolgend wird ein Verfahren zur Ortung eines Beacons 1, insbesondere unter Verwendung eines Ortungssystems, wie es oben beschrieben ist, erläutert (Fig. 2), wobei als Transponder ein Mobilgerät verwendet wird.

Das Verfahren beginnt im Schritt S1.

Im Schritt S2 wird vom Mobilgerät 5 ein Funksignal eines Beacons1 empfangen. Das Funksignal des Beacons1 enthält den Identifikationsbezeichner des Beacons 1, d. h den Beacon-Code.

Danach folgt die Ausführung des Schrittes S3, in dem der Beacon-Code aus dem empfangenen Funksignal extrahiert wird.

Im darauffolgenden Schritt S4 wird der extrahierte Beacon-Code vom Mobilgerät 5 an den Beacon-Server 2 übermittelt. Hat der Beacon-Server 2 den Beacon-Code empfangen, dann ermittelt er, ob der Beacon-Code in der am Beacon-Server 2 gespeicherten Liste der gesuchten Beacon-Codes enthalten ist. In dieser Liste sind elektronische Sucher-Adressen, wie z.B. Telefonnummer, E-Mail-Adresse, Messenger-Adresse mit den gesuchten Beacon-Codes verknüpft gespeichert. Hat der Beacon-Server 2 ermittelt, dass der übermittelte Beacon-Code ein gesuchter Beacon-Code ist, dann übermittelt er dem Sucher über die mit dem Beacon-Code verknüpfte Sucher-Adresse eine Nachricht, dass der Beacon-Code erfasst wurde. Daraufhin erwartet der Beacon-Server 2 eine vom Sucher erteilte Freigabe, Kontaktinformationen des Suchers, wie z.B. Telefonnummer, E-Mail-Adresse, Messenger-Adresse, an das Mobilgerät 5, das den gesuchten Beacon-Code erfasst hat, übermitteln zu dürfen. Erteilt der Sucher dazu die Freigabe, dann übermittelt der Beacon-Server 2 dessen Kontaktinformationen an das Mobilgerät 5. Zusätzlich kann der Beacon-Server 2 zusammen mit der Kontaktinformation weitere Informationen über das gesuchte Objekt, wie z. B. Art des Objekts, Farbe, Größe, Form, Abbild (Foto), eindeutige und/oder weitere Merkmale, an das Mobilgerät 5 übermitteln.

Danach geht der Verfahrensablauf auf den Schritt S5 über, in dem das Mobilgerät 5 überprüft, ob der Beacon-Server 2 Kontaktinformationen übermittelt hat.

Falls im Schritt S5 das Mobilgerät 5 erkannt hat, dass der Beacon-Server 2 Kontaktinformationen übermittelt hat, dann wird Schritt S6 ausgeführt, in dem die Kontaktinformationen am Mobilgerät 5 angezeigt werden. Werden am Mobilgerät 5 des Finders die Kontaktinformationen des Suchers angezeigt, dann kann der Finder entscheiden, ob er eine Kontaktaufnahme initiieren möchte, so dass eine Kommunikation zwischen ihm und dem Sucher stattfindet. Hierbei erfolgt die Kontaktaufnahme bzw. Kommunikation über die in der Kontaktinformation hinterlegten Kontaktmöglichkeiten, wie z. B. Telefonnummer, E-Mail-Adresse, Messenger-Adresse und/oder über das Computer-Programm, das das erläuterte Verfahren ausführt.

Danach wird Schritt S7 ausgeführt, in dem überprüft wird, ob der Betrieb fortzusetzen ist. Ist der Betrieb nicht fortzusetzen, dann folgt Schritt S8, in dem das Verfahren endet. Falls jedoch der Betrieb fortzusetzen ist, geht der Verfahrensablauf nach der Ausführung des Schrittes S7 auf den Schritt S2 über.

Wird im Schritt S5 festgestellt, dass der Beacon-Server 2 an das Mobilgerät 5 keine Kontaktinformationen übermittelt hat, dann geht der Verfahrensablauf direkt auf den Schritt S7 über.

Mit dem oben erläuterten Verfahren zur Ortung eines Beacons 1 werden Beacon-Codes aus Funksignalen, die im Nahfeldbereich eines Beacons 1 empfangen werden, vom Mobilgerät 5 an den Beacon-Server 2 übermittelt. Anhand des übermittelten Beacon-Codes stellt der Beacon-Server 2 fest, ob dieser Beacon-Code in der Liste der gesuchten Beacon-Codes enthalten ist, und falls es ein gesuchter Beacon-Code ist, übermittelt der Beacon-Server 2 an eine mit dem zu suchenden Beacon-Code verknüpft gespeicherte Sucher-Adresse eine Nachricht, dass der Beacon-Code erfasst wurde, d.h. an den mit der Sucher-Adresse adressierten Sucher. Der Sucher kann dann dem Beacon-Server 2 eine Freigabe erteilen, seine Kontaktinformationen an das Mobilgerät 5, das den gesuchten Beacon-Code erfasst hat, zu übermitteln. Übermittelt der Beacon-Server 2 eine solche Kontaktinformation, dann zeigt das Mobilgerät 5 die Kontaktinformation automatisch an. Durch die Ausführung dieses Verfahrens wird die Möglichkeit geschaffen, dass ein Finder, dessen Mobilgerät 5 ein gesuchtes Beacon 1 gefunden hat, eine Kontaktaufnahme mit dem Sucher des Beacons 1 initiieren kann. Dadurch können der Finder und der Sucher miteinander in Kommunikation treten, um dem Sucher über den Finder den mittelbaren Zugriff auf das gesuchte Beacon 1 und das damit verbundene Objekt zu ermöglichen.

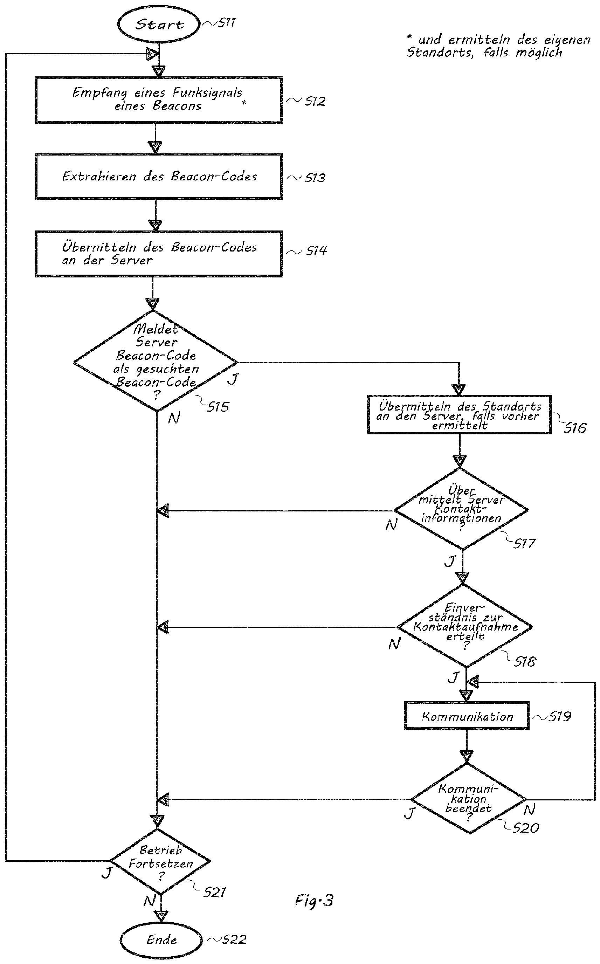

Nachfolgend wird ein erweitertes Verfahren zur Ortung eines Beacons 1, insbesondere unter Verwendung des oben beschriebenen Ortungssystems, erläutert (Fig. 3).

Das Verfahren beginnt in Schritt S11.

Im Schritt S12 wird vom Mobilgerät 5 ein Funksignal eines Beacons1 empfangen. Das Funksignal des Beacons 1 enthält den Identifikationsbezeichner des Beacons 1, so wie bereits oben erläutert. Vorzugsweise wird in diesem Schritt auch eine Ermittlung der Standortkoordinaten des Mobilgeräts 5 durchgeführt, da dann die Standortkoordinaten mit dem empfangenen Funksignal eines Beacons 1 möglichst genau korrelieren. Der Zweck der Ermittlung der Standortkoordinaten wird weiter unten genauer erläutert. Sollte eine Standortermittlung nicht möglich sein, z.B. in Innenräumen, dann entfällt diese.

Danach folgt die Ausführung des Schrittes S13, in dem der Beacon-Code aus dem empfangenen Funksignal extrahiert wird.

Im darauffolgenden Schritt S14 wird der extrahierte Beacon-Code vom Mobilgerät 5 an den Beacon-Server 2 übermittelt. Hat der Beacon-Server 2 den Beacon-Code empfangen, dann ermittelt er, ob der Beacon-Code in der am Beacon-Server 2 gespeicherten Liste der gesuchten Beacon-Codes enthalten ist, so wie es oben bereits erläutert ist. Hat der Beacon-Server 2 ermittelt, dass der übermittelte Beacon-Code ein gesuchter Beacon-Code ist, dann übermittelt er dem Sucher, der über die mit dem Beacon-Code verknüpfte Sucher-Adresse gespeichert ist, eine Nachricht, dass der Beacon-Code erfasst wurde. Daraufhin erwartet der Beacon-Server 2 eine vom Sucher erteilte Freigabe, Kontaktinformationen des Suchers an das Mobilgerät 5, das den gesuchten Beacon-Code erfasst hat, übermitteln zu dürfen. Der Beacon-Server 2 sendet dem Mobilgerät 5 eine Nachricht, dass der zuvor übermittelte Beacon-Code der eines gesuchten Beacons 1 ist.

Im darauffolgenden Schritt S15 überprüft das Mobilgerät 5, ob der Beacon-Server 2 eine solche Nachricht, mit der der Beacon-Code als gesuchter Beacon-Code gemeldet wird, übermittelt. Ist das der Fall, dann wird Schritt S16 ausgeführt, in dem das Mobilgerät 5 seine Standortkoordinaten an den Beacon-Server 2 übermittelt, sofern es diese vorher im Schritt S12 ermittelt hat, wie bereits oben erläutert. Insbesondere bei hohen Geschwindigkeiten des Mobilgerätes 5 in Verbindung mit einer größeren Latenz der Datenverbindung 6 und/oder längerer Antwortzeit des Beacon-Servers 2 ist es nämlich zu erwarten, dass sich das Mobilgerät 5 in der Zeitspanne zwischen der Ausführung des Schrittes S12 und der Ausführung des Schrittes S16 erheblich bewegt und somit seinen Standort relativ zum Beacon 1 verändert hat. Eine solche Standortänderung mit einer späteren Standortbestimmung könnte dazu führen, dass beim Erfassen eines gesuchten Beacons 1 eine erheblich Abweichung zwischen dem Ort, an dem das Funksignal des Beacons 1 empfangen wurde, und dem aktuellen Standort des Mobilgeräts 5, der an den Beacon-Server 2 übermittelt wird, auftritt. Dadurch würde die korrekte Auswertung bzw. Weiterverarbeitung der Standortkoordinaten beeinträchtigt.

Danach geht der Verfahrensablauf auf den Schritt S17 über, in dem das Mobilgerät 5 überprüft, ob der Beacon-Server 2 Kontaktinformationen übermittelt hat, so wie bereits oben erläutert.

Im darauffolgenden Schritt S18 überprüft das Mobilgerät 5, ob der Finder sein Einverständnis zur Kontaktaufnahme mit dem Sucher erteilt. Dieses geschieht vorzugsweise durch eine Anzeige der zuvor übermittelten Kontaktinformationen des Suchers zusammen mit einer Abfrage, ob vom Finder das Einverständnis zur Kontaktaufnahme mit dem Sucher erteilt wird. Es können hierbei mehrere Kommunikationskanäle bzw. Kommunikationsmedien für eine gegebene Kontaktinformation zur Nutzung möglich sein, wie z.B. eine Telefonnummer, über die telefoniert oder an die Kurznachrichten versendet werden können. Sind mehrere solcher Kommunikationskanäle bzw. Kommunikationsmedien für eine gegebene Kontaktinformation möglich, dann hat der Sucher vorzugsweise vorher einen bevorzugten ausgewählt, wobei die Auswahl dem Finder angezeigt wird. Der Finder wählt dann mit seiner Einverständniserteilung einen bevorzugten Kommunikationskanal über ein bevorzugtes Kommunikationsmedium aus. Alternativ kann die Auswahl auch automatisch erfolgen, z.B. nach vorbestimmten Prioritäten.

Hat der Finder im Schritt S18 sein Einverständnis zur Kontaktaufnahme erteilt, so wird Schritt S19 ausgeführt, in dem eine Kommunikation zwischen dem Mobilgerät 5 des Finders und dem Sucher aufgebaut wird bzw. stattfindet. Die automatisch aufgebaute Kommunikation richtet sich dabei danach, welche Kommunikationsmöglichkeiten vom Sucher angeboten waren bzw. welcher Kommunikationskanal ausgewählt wurde.

Danach wird Schritt S20 ausgeführt, in dem das Mobilgerät 5 überprüft, ob die Kommunikation zwischen dem Sucher und dem Mobilgerät 5 des Finders beendet ist. Ist die Kommunikation (noch) nicht beendet, dann wird erneut der Schritt S19 ausgeführt.

Wird im Schritt S20 vom Mobilgerät 5 festgestellt, dass die Kommunikation zwischen dem Finder und dem Sucher beendet ist, dann wird Schritt S21 ausgeführt, in dem überprüft wird, ob der Betrieb fortzusetzen ist. Ist der Betrieb nicht fortzusetzen, dann folgt Schritt S22, in dem das Verfahren endet. Falls jedoch der Betrieb fortzusetzen ist, geht der Verfahrensablauf nach der Ausführung des Schrittes S21 auf den Schritt S12 über.

Wird im Schritt S15 festgestellt, dass der Beacon-Server 2 dem Mobilgerät 5 den Beacon-Code nicht als gesuchten Beacon-Code meldet, oder übermittelt der Beacon-Server 2 im Schritt S17 keine Kontaktinformationen des Suchers oder erteilt der Finder in Schritt S18 sein Einverständnis zur Kontaktaufnahme nicht, dann wird der Verfahrensablauf direkt mit der Ausführung des Schrittes S21 fortgesetzt.

Mit dem oben erläuterten erweiterten Verfahren zur Ortung eines Beacons 1 werden Beacon-Codes aus Funksignalen, die im Nahfeldbereich eines Beacons 1 empfangen werden, vom Mobilgerät 5 an den Beacon-Server 2 übermittelt. Anhand des übermittelten Beacon-Codes stellt der Beacon-Server 2 fest, ob dieser Beacon-Code in der Liste der gesuchten Beacon-Codes enthalten ist, und falls es ein gesuchter Beacon-Code ist, übermittelt der Beacon-Server 2 an eine mit dem zu suchenden Beacon-Code verknüpft gespeicherte Sucher-Adresse eine Nachricht, dass der Beacon-Code erfasst wurde, d.h. an den mit der Sucher-Adresse adressierten Sucher. Das Mobilgerät 5 übermittelt dann seinen Standort an den Beacon-Server 2. Der Sucher kann dem Beacon-Server 2 eine Freigabe erteilen, seine Kontaktinformationen an das Mobilgerät 5, das den gesuchten Beacon-Code erfasst hat, zu übermitteln. Übermittelt der Beacon-Server 2 eine solche Kontaktinformation, dann zeigt das Mobilgerät 5 die Kontaktinformation automatisch zusammen mit einer Abfrage zum Einverständnis zur Kontaktaufnahme und ggf. der möglichen Kommunikationskanäle an. Wird das Einverständnis erteilt, dann wird die Kommunikation zwischen Finder und Sucher automatisch initiiert. Durch die Ausführung dieses Verfahrens wird die Möglichkeit geschaffen, dass ein Nutzer, dessen Mobilgerät 5 ein gesuchtes Beacon 1 gefunden hat, eine Kontaktaufnahme mit dem Sucher des Beacons 1 initiieren kann. Dadurch können der Finder und der Sucher miteinander in Kommunikation treten, um dem Sucher über den Finder den mittelbaren Zugriff auf das gesuchte Beacon 1 und das damit verbundene Objekt zu ermöglichen. Der Finder kann dabei den automatischen Aufbau der Kommunikation initiieren.

Ein gesuchtes Beacon1 lässt sich in dessen Nahfeldbereich, der der Bereich ist, in dem das durch das Beacon1 ausgesendete Funksignal empfangbar ist, typischerweise bis zu 30 m, orten, wie bereits oben erläutert. Hierbei ermittelt das Mobilgerät 5 seinen eigenen Standort und gibt diesen an den Beacon-Server 2 weiter. Dies bedeutet, dass der Standort des gesuchten Beacons 1 nur auf die Größe des Nahfeldbereiches genau festgelegt werden kann, also typischerweise auf 30 m genau.

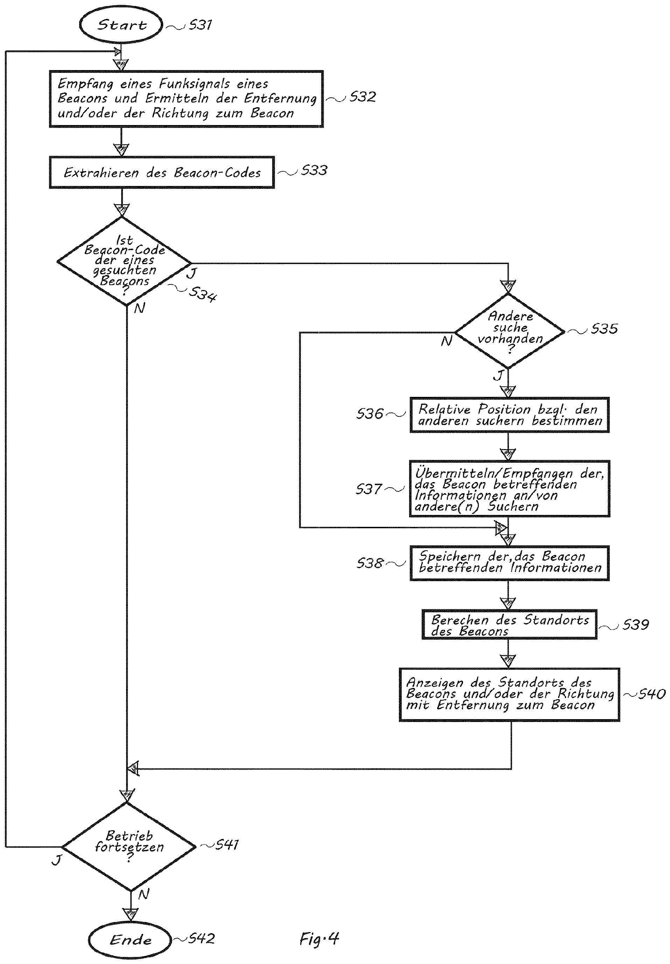

Nachfolgend wird ein Verfahren zur Ortung eines gesuchten Beacons 1 in dessen Nahfeldbereich, das eine genauere und/oder schnellere Ortung des Beacons 1 ermöglicht, erläutert (Fig. 4).

Das Verfahren zur Ortung eines Beacons1 in dessen Nahfeldbereich kann mit dem oben erläuterten Ortungssystem ausgeführt werden. Der Beacon-Server 2, der Bedienercomputer 3, der Sicherheitsdienstcomputer 7 und/oder der Ermittlungsbehördencomputer 8 können hierbei auch weggelassen werden.

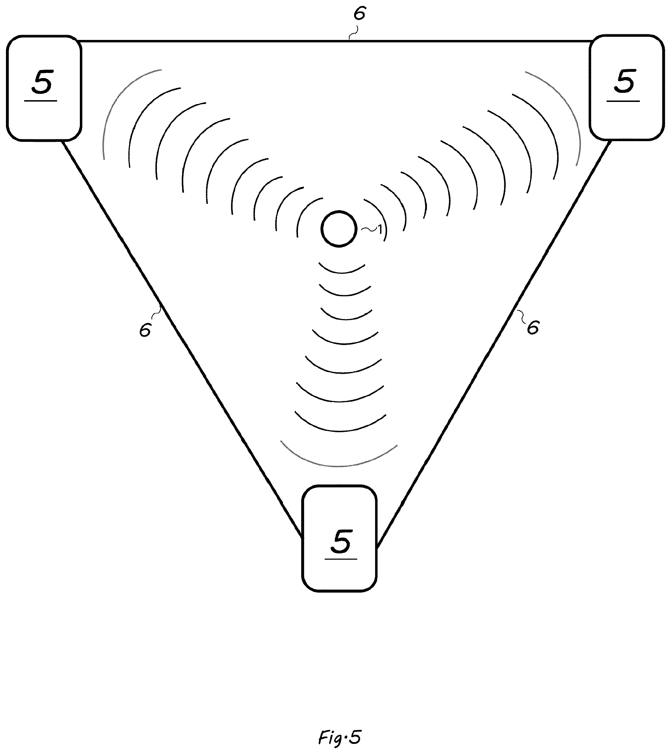

Die Ortung des gesuchten Beacons 1 erfolgt zumindest mit dem einen als Transponder fungierenden Mobilgerät 5 des Suchers. Die Ortung kann auch zusammen mit anderen Nutzern anderer Transponder 5 erfolgen (Fig. 5). Fig. 5 zeigt beispielhaft drei suchende Mobilgeräte bzw. Transponder 5. Grundsätzlich lässt sich das Verfahren aber mit einer beliebigen Anzahl an Transpondern 5 durchführen.

Die anderen Nutzer werden nachfolgend auch als "andere Sucher" bezeichnet. Das Mobilgerät 5 des Suchers ist mit den Mobilgeräten 5 der anderen Sucherüber eine Datenverbindung 6 verbunden. Auch die Mobilgeräte 5 der anderen Sucher können über eine Datenverbindung 6 miteinander verbunden sein.

Die anderen Sucher sind dem Sucher bereits vor Ausführung des Verfahrens bekannt und/oder die anderen Sucher werden aus potentiellen anderen Suchern, die sich in dem Nahfeldbereich des gesuchten Beacons 1 oder in der Nähe aufhalten, ermittelt. Die Ermittlung anderer Sucher geschieht bspw. dadurch, dass der Beacon-Server 2 über den Standort der Mobilgeräte 5 potentieller anderer Sucher informiert ist und bei einer vom Sucher eintreffenden Suchanfrage die potentiellen anderen Sucher "einlädt", an der Suche teilzunehmen.

Sollte mehr als ein Mobilgerät 5 zur Suche verwendet werden, so ist vor der Ausführung des Verfahrens der Beacon-Code des gesuchten Beacons 1 an die an der Suche teilnehmenden Mobilgeräte 5 zu übermitteln, d. h. die gemeinsame Suche nach einem bestimmten Beacon1 ist zu vereinbaren. Diese Vereinbarung geschieht indem der Sucher vor Beginn des Verfahrens den Beacon-Code des gesuchten Beacons1 festlegt und dieser an die Mobilgeräte 5 der anderen Sucher übermittelt wird.

Um weiter unten erläuterte Messmethodik anwenden zu können, ist es außerdem von Vorteil, wenn die mehreren Mobilgeräte 5 vor Ausführung des Verfahrens zeitlich miteinander synchronisiert sind.

Das Verfahren beginnt in Schritt S31.

Im Schritt S32 wird ein Funksignal eines Beacons1 empfangen und die Entfernung und/oder Richtung zum Beacon 1 ermittelt. Das Funksignal enthält den Identifikationsbezeichner des Beacons 1, d. h. den Beacon-Code. Da die Entfernung des Mobilgeräts 5 zum gesuchten Beacon 1 mit der Feldstärke des empfangenen Funksignals korreliert, kann durch Messen der Feldstärke in etwa die Entfernung ermittelt werden. Die Feldstärke kann bspw. mit Hilfe einer einfachen Antenne und nachgeschalteter Auswerteschaltung gemessen werden. Alternativ oder zusätzlich kann die Richtung zum Beacon 1 durch Bestimmen der Empfangsrichtung des Funksignals durch Funkpeilung ermittelt werden, bspw. durch eine geeignete Antennenanordnung, insbesondere durch die Verwendung mehrerer Antennen. Außerdem ist ein Zeitstempel des Funksignalempfangs zu erfassen, wie es weiter unten erläutert ist.

Danach folgt die Ausführung des Schrittes S33, in dem der Beacon-Code aus dem empfangenen Funksignal extrahiert wird.

Im darauf folgenden Schritt S34 überprüft das Mobilgerät 5, ob der Beacon-Code der des gesuchten Beacons1 ist.

Ist der Beacon-Code der des gesuchten Beacons 1, dann wird Schritt S35 ausgeführt, in dem das Mobilgerät 5ermittelt, ob andere Sucher vorhanden sind bzw. an der Suche teilnehmen.

Wird im Schritt S35 festgestellt, dass andere Sucher vorhanden sind, dann folgt die Ausführung des Schritts S36, in dem das Mobilgerät 5 die relative Position zu den Mobilgeräten 5 der anderen Sucher bestimmt. Die Bestimmung der relativen Position kann nach mehreren Methoden erfolgen, die auch miteinander kombiniert angewandt werden können, um die Genauigkeit zu erhöhen:
- Feldstärkenmessung und/oder Richtungsbestimmung eines von dem jeweiligen anderen Mobilgerät 5 ausgesendeten und am Mobilgerät 5 empfangenen Funksignals. Mit der gemessenen Feldstärke kann in etwa auf die Entfernung geschlossen werden, wie oben bereits erläutert. Die Richtungsbestimmung erfolgt, wie oben ebenfalls bereits erläutert, über eine Funkpeilung.
- Ermittlung der Laufzeitdifferenzen von Funksignalen, die zwischen den Transpondern bzw. Mobilgeräten 5 übermittelt werden. Hierzu wird vor der Ausführung des Verfahrens eine zeitliche Synchronisation der Mobilgeräte 5 durchgeführt und bei Empfang eines solchen Funksignals von einem Mobilgerät 5 der Zeitstempel erfasst. Der Zeitstempel wird an das das Funksignal sendende Mobilgerät 5 übermittelt, das aus der Sendezeit, die es zuvor protokolliert hat, und der Empfangszeit laut Zeitstempel die Laufzeit des Funksignals ermittelt. Aus der Laufzeit ist die Entfernung zu ermitteln und aus den Entfernungen der Mobilgeräte 5 voneinander deren relative Position zueinander.
- Ortung mit Ortungssensoren, wobei mit diesen die absoluten Positionen der Transponder bzw. der Mobilgeräte 5 ermittelt werden und sich daraus die relativen Positionen berechnen lassen. Außerhalb von Gebäuden stehen satelliten- bzw. funkgestützte Ortungssysteme zu Verfügung, innerhalb von Gebäuden gibt es am Markt funkgestützte Ortungssysteme, die z.B. mit Hilfe von Beacons realisiert sind.
- Zusätzlich können die Messwerte weiterer Sensoren, wie z. B. Bewegungs- bzw. Beschleunigungssensoren, mit in die Bestimmung der relativen Positionen zueinander einbezogen werden.

Dann folgt die Ausführung des Schritts S37, in dem das Mobilgerät 5 die das Beacon 1 betreffenden Informationen, die in Schritt S32 ermittelt wurden, an die anderen Mobilgeräte 5 der anderen Sucherübermittelt und/oder von diesen empfängt. Insbesondere werden auch die Zeitstempel mit übermittelt.

Danach wird Schritt S38 ausgeführt, in dem die zuvor ermittelten und/oder empfangenen Informationen mit dem jeweiligen Zeitstempel versehen gespeichert werden.

Im darauf folgenden Schritt S39 wird der Standort des Beacons1 berechnet. Dazu werden sämtliche vorliegenden, zuvor gespeicherten Informationen das Beacon 1 betreffend mit in die Berechnung einbezogen. Dadurch kann selbst bei einer Suche mit nur einem Mobilgerät 5 durch den zeitlichen und/oder örtlichen Verlauf der Messwerte, wenn sich das Mobilgerät 5 relativ zum Beacon 1 bewegt hat, ein Standort des Beacons 1 berechnet werden. Insbesondere kann bei einer Suche durch mehrere Mobilgeräte 5 mit Hilfe der Differenzen der Empfangszeitstempel des Funksignals des Beacons 1 am jeweiligen Mobilgerät 5 in Verbindung mit der zuvor ermittelten relativen Positionsdaten der Mobilgeräte 5 zueinander die relative Position des Beacons 1 zu den Mobilgeräten 5 berechnet werden, so wie es oben für die Berechnung der relativen Positionen der Mobilgeräte 5 zueinander erläutert ist.

Im darauffolgenden Schritt S40 werden der errechnete Standort des Beacons und/oder die Richtung und/oder die Entfernung zum Beacon1 am Mobilgerät 5 angezeigt. Das Anzeigen des Standortes des Beacons1 erfolgt vorzugsweise auf einer Übersichtskarte, auf der der Standort des Mobilgerätes 5 und auch die relativen Positionen anderer Sucher bzw. deren Mobilgeräte 5 angezeigt werden. Bei der Anzeige der Richtung kann vorher mittels Lagesensoren die Lage des Mobilgerätes 5 im Raum und/oder mittels magnetischer Sensoren die Lage des Mobilgerätes 5 bezüglich des Erdmagnetfeldes ermittelt und mit in die Darstellung der Richtung derart einbezogen werden, dass der dargestellte Richtungspfeil in Richtung auf das Beacon 1 zeigt.

Dann folgt die Ausführung des Schrittes S41, in dem überprüft wird, ob der Betrieb fortzusetzen ist. Ist der Betrieb nicht fortzusetzen, dann folgt Schritt S42, in dem das Verfahren endet. Falls jedoch der Betrieb fortzusetzen ist, geht der Verfahrensablauf nach der Ausführung des Schrittes S41 auf den Schritt S32 über.

Ist im Schritt S34 festgestellt worden, dass der extrahierte Beacon-Code der eines nicht gesuchten Beacons1 ist, dann geht der Verfahrensablauf direkt auf den Schritt S41 über.

Ist im Schritt S35 festgestellt worden, dass keine anderen Sucher mit anderen Mobilgeräten 5 vorhanden sind, dann geht der Verfahrensablauf direkt auf den Schritt S38 über.

Die Steuerung des Ablaufs des Verfahrens kann auch durch den Beacon-Server 2 erfolgen.

Mit dem Verfahren zur Ortung eines Beacons1 in dessen Nahfeldbereich kann ein solches schnell, d. h. unmittelbar nach einem Verlust des Objektes, an dem dasBeacon1 angebracht ist, und/oder genauer geortet werden. Beispielsweise kann ein soeben verlorenes Objekt leicht selbst wieder gefunden werden. Eine genauere Ortung ist insbesondere dann von Vorteil, wenn sich ein große Anzahl an anderen Objekten, die gleichartig zu dem mit Hilfe des Beacons 1 gesuchten Objekt sind, im Nahfeldbereich des Beacons 1 befinden, wie z. B. in einem Einkaufszentrum, Warenhaus, Supermarkt und/oder Verkehrsknotenpunkt. Durch eine Richtungsangabe zum gesuchten Beacon 1 kann dem Sucher die Richtung zum gesuchten Objekt gewiesen werden, so dass er sich auf das Objekt zubewegen kann.

Bei der Kombination der oben erläuterten Verfahren durch gleichzeitige bzw. aufeinander folgende Ausführung der Verfahren wird mit dem Verfahren zur Ortung eines Beacons 1 zunächst ein Finder eines gesuchten Beacons 1 ermittelt, der sich in dessen Nahfeldbereich befindet. Mit dem Verfahren zur Ortung eines Beacons 1 in dessen Nahfeldbereich kann der Finder dann gezielt an das gesuchte Objekt herangeführt, selbst wenn er dieses Objekt nicht leicht erkennen kann.

Grundsätzlich kann ein Mobilgerät 5 automatisch die oben erläuterten Verfahren durchführen. Vorteilhafterweise kann es in Kraftfahrzeugen, insbesondere in solchen, die oft und/oder über weite Strecken bewegt werden, verbaut sein. Dadurch kann die Wahrscheinlichkeit einer erfolgreichen Ortung eines gesuchten Beacons 1 erhöht werden.

Grundsätzlich kann an Stelle eines erfassenden Mobilgerätes 5 auch ein stationärer Transponder vorgesehen sein, der wie ein Mobilgerät mit einer Datenverbindung zum Beacon-Server 2 ausgebildet ist. Beispielsweise kann in Eingangsbereichen von Gebäuden, an Mautbrücken oder Verkehrszeichen etc. der Transponder angebracht sein, um vorbeigeführte Beacons 1 zu erfassen und damit gesuchte Beacons 1 zu entdecken. Er übermittelt die Information der Beacons 1 in gleicher Weise an den Beacon-Server 2, wie die oben erläuterten Mobilgeräte 5. Bei Verwendung eines solchen Beacon-Scanners ist vorzugsweise am Beacon-Server 2 eine Benachrichtigungsadresse hinterlegt, die bei Freigabe durch den Sucher benachrichtigt wird. Dies ist bspw. eine Ermittlungsbehörde, ein Sicherheitsdienst oder eine andere der oben genannten Institutionen.

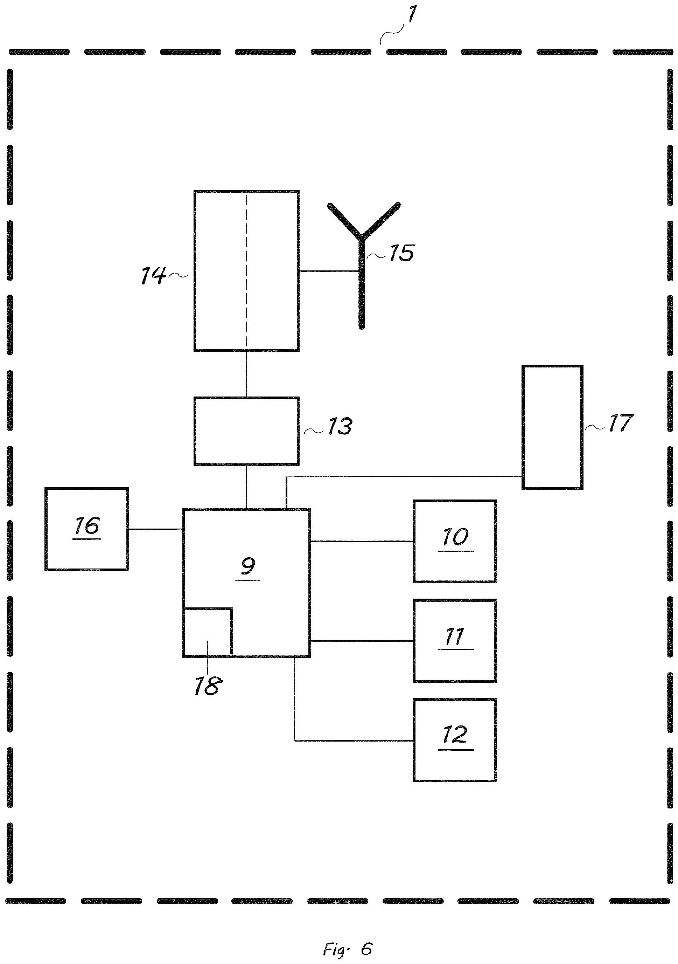

Nachfolgend wird der Aufbau eines aktiven Beacons 1 näher anhand von Figur 6 erläutert. Das aktive Beacon weist einen Mikroprozessor 9 auf, der mit einem Arbeitsspeicher (RAM) 10, einem nicht-flüchtigen, beschreibbaren Speicher (EPROM) 11, einen nicht-flüchtigen Speicher (ROM) 12 verbunden ist. Der Mikroprozessor 9 ist weiterhin mit einem Modulator/Demodulator 13 verbunden, der digitale Signale des Mikroprozessors 9 auf zwei vorbestimmte Trägerfrequenzen (hier: 433 MHz und 868 MHz) moduliert. Das modulierte Signal wird vom Modulator/Demodulator 13 an eine Sende-/Empfangseinrichtung 14 weitergeleitet, welcher an eine Antenne 15 gekoppelt ist, um diese Signale entsprechend über die Antenne 15 zu versenden. Die Sende-/Empfangseinrichtung 14 kann auch mittels der Antenne 15 Funksignale empfangen, welche vom Modulator/Demodulator 13 demoduliert werden und als digitales Signal dem Mikroprozessor 9 zur Weiterverarbeitung zur Verfügung gestellt werden.

Der Mikroprozessor 9 ist weiterhin noch mit einer Uhr (Timer) 16 und einer Schnittstelle (Interface) 17 verbunden. Die Schnittstelle 17 dient zum Anschließen von Sensoren, wie zum Beispiel einem Temperatursensor, einem Bewegungssensor, einem Schwingungssensor, einem Lichtsensor, einem Beschleunigungssensor, einem Neigungssensor, einem Feuchtesensor oder einem sonstigen Sensor, welcher eine für den Transport relevante Größe erfassen kann. Mit einem solchen Sensor kann ein physikalischer Parameter mit dem Beacon in regelmäßigen Abständen erfasst und im Beacon aufgezeichnet werden. Diese Daten können später ausgelesen werden. Hierdurch kann bspw. festgestellt werden, ob ein Paket während des Transportes ordnungsgemäß behandelt worden ist. Je nach Inhalt des Paketes sind unterschiedliche physikalische Parameter relevant.

Der Mikroprozessor 9 weist ein Schlafmodul 18 auf, das den Betriebszustand des Beacons in einen Schlafzustand für eine vorbestimmte Zeitdauer setzen kann, so dass der Energieverbrauch während des Schlafzustandes sehr gering ist. Hierdurch kann der Beacon in einem vorbestimmten, einstellbaren Zeitabstand aktiviert werden, um beispielsweise ein Beacon-Signal abzugeben und für eine vorbestimmte Zeitdauer empfangsbereit zu sein. Falls kein entsprechendes Signal empfangen wird, geht der Beacon 1 wieder in den Schlafzustand über.

Der Beacon 1 weist als Stromversorgung eine Batterie (nicht dargestellt) auf. Die Antenne 15 kann beispielsweise als Bipol-Antenne ausgebildet sein, die vor allem auf die Frequenzen von 430 MHz und 868 MHz abgestimmt ist. Die Antenne kann auch zur gerichteten Abstrahlung des Funksignales ausgebildet sein, wobei insbesondere die Antenne 15 benachbart zu einem Reflektor angeordnet sein kann. Die Antenne 15 ist beispielsweise als gedruckte Leiterbahn auf einer Leiterplatte ausgebildet, wobei der Reflektor eine elektrisch-leitende, insbesondere geerdete Schicht auf der Rückseite der Leiterplatte ist.

Vorzugsweise werden Beacons 1 in unterschiedlichen Größen verwendet. Je größer die Reichweite ist, desto größer ist die Antenne 15 auszubilden. Bei Beacons, welche an Containern vorgesehen werden, bestehen praktisch keine Größenbeschränkungen, so dass ein solcher Beacon zumindest in eine Richtung über eine Länge von mehr als 5 cm, insbesondere mehr als 7 cm und mehr als 10 cm verfügen können. Beacon 1, welche hingegen Paketen zugegeben werden, sollten möglichst klein sein. Hier kann es zweckmäßig sein, die maximale Dimension eines solchen Beacons 1 auf 5 cm, und insbesondere auf 4 cm zu begrenzen. Die Antenne des Beacons muss dann entsprechend kleiner ausgebildet sein, wodurch die Reichweite bei gleichem Energieverbrauch entsprechend geringer ist.

Die oben erläuterten Ausführungsbeispiele zum Ortungssystem betreffen Anwendungen, mit welchen vor allem gestohlene oder verlorene Gegenstände gesucht werden. Das erfindungsgemäße Ortungssystem ist jedoch auch für andere Anwendungen geeignet, insbesondere für die Verfolgung von Waren. Dies gilt insbesondere mit dem in Figur 6 gezeigten Beacon, welcher für eine Lebensdauer von bis zu einigen Jahren ausgebildet sein kann, wenn die Beacon-Signale in einem Abstand von jeweils einigen Sekunden abgegeben werden. Bei einem ersten Prototyp wurde eine Lebensdauer mit einer handelsüblichen Knopfzellen-Batterie von 2 Jahren erzielt, wobei das Intervall zwischen zwei aufeinanderfolgenden Beacon-Signalen 4 Sekunden beträgt. Durch Verlängerung dieses Intervalls kann die Lebensdauer des Beacons entsprechend verlängert werden. Hierbei hat der Beacon eine Reichweite von bis zu 100 m, innerhalb welcher er mit einem Transponder kommunizieren kann. Die Reichweite des Beacons hängt von der Größe und der Gestaltung der Antenne ab.

Mit einem solchen Beacon lassen sich Waren sehr gut verfolgen, denn die einen Beacon enthaltende Ware kann aus einer Entfernung von einigen 10 m mittels eines Transponders sicher erkannt werden. Hierdurch kann der Transport von Paketen, Paletten und/oder Containern sicher überwacht werden.

Die Beacon 1 können auch untereinander kommunizieren und ein Netzwerk ausbilden. Hierbei wird ein möglichst kurzer Kommunikationspfad zum nächsten Transponder aufgebaut. Der Begriff "kurzer Pfad" bedeutet, dass die Anzahl der Beacon möglichst gering ist, um mit einem vorbestimmten Beacon 1 mit dem nächstgelegenen Transponder kommunizieren zu können.

Ein Beacon 1, das mit keinem Transponder kommuniziert, sendet in regelmäßigen Abständen ein Beacon-Signal aus, das eine für das Beacon eindeutige Identifikationskennung, wie zum Beispiel eine Seriennummer, enthält. Weiterhin können in dem Beacon-Signal zusätzliche Informationen, wie zum Beispiel Datum, Uhrzeit und die vorhandene Spannung der Spannungsquelle enthalten sein.

Erhält das Beacon aus dem Beacon-Signal eine Rückmeldung durch einen Transponder, in dem eine Identifikationskennung des entsprechenden Transponders enthalten ist, dann fügt es in das folgenden Beacon-Signal diese Identifikationskennung des Transponders ein, solange es von diesem Transponder entsprechende Rückmeldung erhält. Dies dient als Kennzeichnung, dass das Beacon mit diesem Transponder in Kommunikationsverbindung steht. Hierdurch können andere Beacon, die dieses Beacon-Signal empfangen, aber von dem Transponder zu weit entfernt sind, um mit diesem direkt zu kommunizieren, diesen Beacon ein Signal übermitteln, mit welchem sie um Weiterleitung des eigenen Signals an den entsprechenden Transponder bitten. Ist eine solche über ein weiteres Beacon 1 vermittelte Kommunikationsverbindung, welche im Folgenden als Relay-Verbindung bezeichnet wird, aufgebaut, so ergänzt das entfernte Beacon, dessen Signale von einem weiteren Beacon vermittelt werden, seine Beacon-Signale durch eine Information über die Vermittlung des eigenen Signals. Diese Information kann bspw. die Identifikationsnummer des Transponders als auch die Identifikationsnummer des vermittelten Beacons umfassen. Hierdurch erkennen weitere Beacon, dass dieses Beacon eine Relay-Verbindung zu einem Transponder aufweist. Aus diesem Signal ist auch erkennbar, über wieviel weitere Beacons das Signal vermittelt wird. Hierdurch können die noch weiter entfernten Beacon um Vermittlung einer mehrstufigen Relay-Verbindung zum Transponder bitten. Wenn ein Beacon mehrere unterschiedliche Beacon-Signale anderer Beacons empfängt, welche jeweils eine Relay-Verbindung ermöglichen, dann kann es anhand dieser Beacon-Signale erkennen, über welche Relay-Verbindung die kürzeste Verbindung zum nächstgelegenen Transponder möglich ist und diese auswählen.

Mit diesem Verfahren wird eine eindeutige Relay-Verbindung auch von entfernten Beacon zu einem bestimmten Transponder hergestellt. Hierdurch wird vermieden, dass alle in Nachbarschaft befindlichen Beacon untereinander miteinander kommunizieren, wodurch eine enorme Nachrichtenmenge erzeugt werden würde, welche wiederum den Energieverbrauch der einzelnen Beacon erheblich steigern würde.

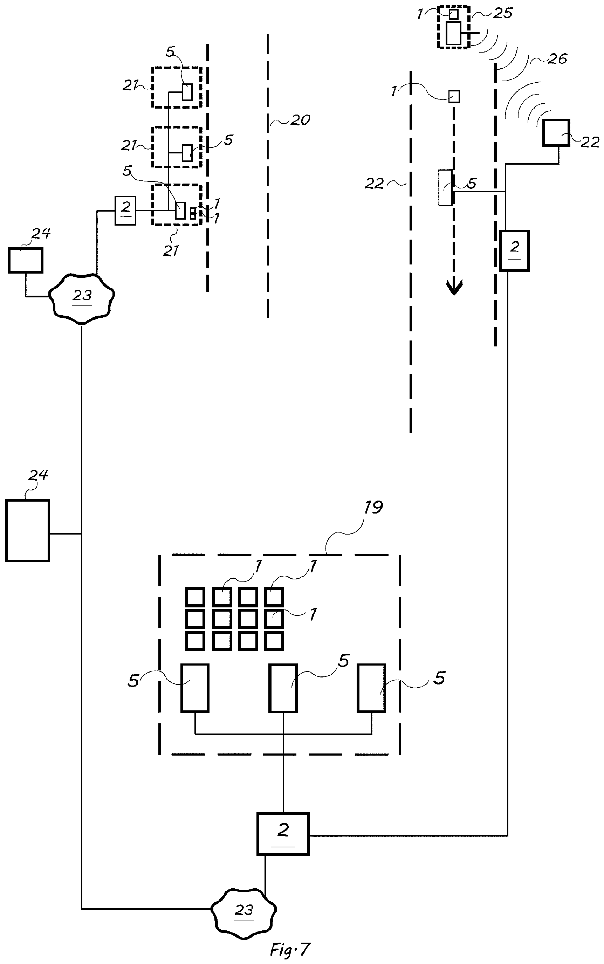

Die oben erläuterten Ortungssysteme können in einem überregionalen Ortungssystem eingesetzt werden, wie es ausschnittsweise in Figur 7 gezeigt ist. Hierin sind beispielhaft ein Umschlagplatz 19 für Container, eine Straße 20, entlang welcher mehrere Paketabgabestellen 21 abgeordnet sind, und eine weitere Straße 22 gezeigt. Der Umschlagplatz 19 für Container kann beispielsweise in einem Hafen oder an einem Straßenverkehrsknoten angeordnet sein. Im Bereich des Umschlagplatzes 19 sind mehrere Transponder 5 angeordnet, die über ein lokales (LAN) oder ein überregionales Datennetz (WAN) mit einem Beacon-Server 2 verbunden sind. Die Container sind jeweils mit einem aktiven Beacon 1 versehen. Durch die Kommunikation zwischen den Beacon 1 und den Transpondern 5 im Bereich des Umschlagplatzes 19 kann, wie es oben erläutert ist, der Ort eines jeden einzelnen Beacons 1 bestimmt werden.

Der Beacon-Server 2 des Umschlagplatzes 19 ist mit dem Internet 23 verbunden und kann so mit einem oder mehreren Anwendungsservern 24 kommunizieren. Der Beacon-Server 2 enthält zumindest eine Liste von Beacon-Codes, welche für einen bestimmten Sucher zu überwachen sind. Dieser Sucher ist beispielsweise ein Logistikunternehmen, das einen der Anwendungsserver 24 betreibt. Dieser Anwendungsserver 24 erhält von einem jeden der Beacon-Server 2 eine Nachricht über ein zu überwachendes Beacon, wenn es mit dem entsprechenden Transponder 5 kommuniziert und der entsprechende Beacon-Code in der dem Logistik-Unternehmen zugeordneten Liste aufgeführt ist. Der Anwendungsserver 24 erhält vor allem entsprechende Nachrichten von dem Beacon-Server 2 im Bereich des Umschlagplatzes 19, da hier vor allem Container mit den entsprechenden Beacons abgestellt werden.

Entlang der Straße 22 ist ein weiterer Transponder 5 angeordnet, der mit einem weiteren Beacon-Server 2 in Verbindung steht. Wird ein Beacon 1 entlang diesem Transponder 5 vorbei bewegt, indem es beispielsweise an einem Container auf einem Lastwagen oder in einem Paket in einem Lastwagen angeordnet ist, dann wird das Beacon 1 von dem Transponder 5 erfasst und der damit verbundene Beacon-Server 2 erzeugt wiederum eine Nachricht an den Sucher. Dieser Sucher kann wiederum das Logistik-Unternehmen sein.

An den Paketabgabestellen 21 ist jeweils ein Transponder 5 angeordnet. Diese Transponder 5 der Paketabgabestellen 21 sind vorzugsweise so ausgebildet, dass sie sowohl mit passiven Beacon als auch mit aktiven Beacon kommunizieren können. Pakete, die in dem Bereich der Abgabestellen 21 gebracht werden und einen Beacon aufweisen, werden von den Transpondern 5 erfasst.

Die Transponder 5 senden entsprechende Nachrichten an den nächstgelegenen Beacon-Server 2. Dieser informiert dann den entsprechenden Sucher mit weiteren Nachrichten anhand der an dem Beacon-Server 2 gespeicherten Listen von Beacon-Codes, welchen jeweils dieser Sucher zugeordnet ist, welcher Sucher entsprechend zu unterrichten ist. Der Beacon-Server 2 sendet hierbei entsprechende Nachrichten mit den Beacon-Code und einer Ortsangabe und/oder Zeitangabe an einen der Anwendungsserver 24 des Suchers. Der Sucher kann beispielsweise ein Paketdienst sein, der bei der Feststellung, dass ein bestimmtes Beacon 1 sich im Bereich einer bestimmten Paketabgabestelle 21 befindet weitere Verfahren automatisch ausführt, um eine kontrollierte Abgabe bzw. Abholung der Pakete zu bzw. von den Paketabgabestellen 21 auszuführen. Diese weiteren Verfahren betreffen insbesondere Identifikations- und Autorisierungsmethoden, welche mit mobilen oder stationären Endgeräten ausgeführt werden können. Paketzusteller besitzen in der Regel ein mobiles Endgerät. Sie erhalten vom Anwendungsserver 25 des Paketdienstes eine entsprechende Nachricht an ihr mobiles Endgerät, welches sie quittieren müssen, um die ordnungsgemäße Zustellung des Paketes an der Paketabgabestelle 21 zu quittieren. Abholer von Paketen an den Paketabgabestellen 21 können sich durch eigene mobile Endgeräte, an welchen entsprechende Softwareanwendungen ausgeführt werden, gegenüber dem Paketdienst autorisieren, sodass sie berechtigt sind, das entsprechende Paket von der Paketabgabestelle 21 abzuholen. Wird das Paket bzw. der darin enthaltene Beacon 1 ohne Autorisierung von der Paketabgabestelle 21 entfernt, so werden automatisch geeignete Maßnahmen ausgeführt. Diese Maßnahmen können die Ausgabe eines Alarms und/oder der die Erfassung und Weiterleitung von Bildern mittels einer Kamera im Bereich der Paketabgabestelle 21 und/oder das Vermerken des jeweiligen Beacon-Codes auf weiteren Listen, welchen anderen Suchern, wie zum Beispiel Ermittlungsbehörden, zugeordnet sind, sodass bei der nächsten Kommunikation dieses Beacons 1 mit einem weiteren Transponder hierauf zugegriffen werden kann.

Die Anwender können mittels der Anwendungsserver 24 die an dem Beacon-Servern 2 für sie geführten Listen bearbeiten und Beacon-Codes hinzufügen oder entfernen. Hierdurch kann ein Anwender selbstständig bestimmen, welche Beacons zu überwachen sind.

Bevorzugt übermitteln die Beacon-Server 2 lediglich Nachrichten an die Anwendungsserver 24, welche den jeweiligen Beacon-Code und eine Ortsangabe und/oder eine Zeitangaben enthalten. Hierdurch müssen am Beacon-Server 2 keine Informationen zu den Gegenständen vorgehalten werden, an welchen die Beacon angeordnet sind. Diese Zuordnung erfolgt erst an den Anwendungsservern 24.

Es kann jedoch Zweckmäßig sein, dass auch an den Beacon-Server 2 automatisch bestimmte Prozesse ausgelöst werden, wenn dieser Beacon-Server 2 mit bestimmten Beacon 1 in Kontakt steht. Auch dies kann von den Suchern mittels der Anwendungsserver 24 entsprechend eingestellt werden. Dies ist vor allem dann zweckmäßig, wenn vor Ort bestimmte Maßnahmen getroffen werden müssen, wie zum Beispiel ein Alarm ausgelöst werden muss, Bilder aufgenommen werden müssen oder in der Nähe befindliche Personen unterrichtet werden müssen.

Im Bereich des Umschlagplatzes 19 und im Bereich der Paketabgabestellen 21 sind jeweils stationäre beziehungsweise ortsfeste Transponder 5 vorgesehen. Grundsätzlich können jedoch auch mobile Endgeräte, wie zum Beispiel Mobiltelefone als Transponder 5 verwendet werden. Solche mobilen Endgeräte werden vorzugsweise an Kraftfahrer ausgegeben, welche zum Beispiel einen Lastwagen 25 fahren. Ein Beacon 1, der sich auf dem Lastwagen 25 befindet, kann dann mit dem mobilen Endgerät, das als mobiler Transponder 5 fungiert, kommunizieren. In regelmäßigen Abständen kann eine solchen Kommunikation erfolgen, wobei das mobile Endgerät vorzugsweise mittels eines Ortungssensors den aktuellen Ort bestimmt. Über eine Funkverbindung 26 kann das mobile Endgerät dann entsprechende Nachrichten, welche den Beacon-Code und eine Orts- und Zeitangabe über eine Telekommunikationsstation 27 an einen der Beacon-Server 2 übermitteln. Dieser Beacon-Server 2 sendet eine entsprechende Nachricht an den entsprechenden Anwendungsserver 24, an dem in regelmäßigen Abständen die Orts- und Zeitangaben dieses Beacons eingehen, sodass hier ein kontinuierliches Bewegungsprofil dieses Beacons 1 und der damit verbundenen Ware vorliegt.

Durch die Trennung von Beacon-Servern 2 und Anwendungsservern 24, wobei an den Beacon-Servern 2 keine Beschreibungen der mit den Beacon 1 zu überwachenden Gegenständen vorhanden ist, kann die Infrastruktur bestehend aus den Transpondern 5 und den Beacon-Servern 2 von unterschiedlichen Anwendern mit den jeweiligen Anwendungsservern 24 gemeinsam genutzt werden. Hierdurch kann eine überregionale Infrastruktur einfach aufgebaut werden.

Werden aktive Beacons, insbesondere Beacons nach dem ZigBee-Standard verwendet, so haben die Beacon eine Reichweite von einigen 10 bis zu 100 oder 200 Meter. Hierdurch können beispielsweise die Transponder 5 der Paketabgabestellen 21 gleichzeitig Beacon erfassen, welche entlang der benachbarten Straße 20 befördert werden. Die gemeinsame Nutzung der Infrastruktur zusammen mit der großen Reichweite der Beacon nach dem ZigBee-Standard oder einem ähnlichen Standard mit einer ähnlichen Funkreichweite, erlaubt den Aufbau einer Infrastruktur, welche mit Beacon oftmals frequentierte Bereich überregional abdeckt.

Die Kombination aus Beacon mit relativ großer Reichweite und Transponder, wobei die Ortbestimmung nicht mittels der Beacons, sondern mittels der Transponder ausgeführt wird, erlaubt die Verwendung einfacher, langlebiger Beacons. Die Transponder sind einfach ausgebildet und mit einem WAN und insbesondere mit dem Internet verbunden, so dass sie einfache Nachrichten, die lediglich den Beacon-Code und eine Ortsangabe und/oder Zeitangabe enthalten, übermitteln können. Diese Transponder können somit sehr einfach ausgebildet sein. Hierdurch kann eine flächendeckende, überregionale Infrastruktur einfach aufgebaut werden. Durch das Vorsehen von Beacon-Server und Anwendungsserver, wobei nur in dem Anwendungsservern Beschreibungen zu den zu überwachenden Gegenständen vorhanden sind, kann die von mehreren Anwendern gemeinsam genutzte Infrastruktur, welche die Transponder und die Beacon-Server umfasst, sehr einfach gehalten werden. Zudem ist diese Beacon-Infrastruktur bezüglich des Datenschutzes unkritisch und die hierfür anfallenden Kosten können von mehreren Anwendern geteilt werden. Die Anwender betreiben ihren eigenen Anwenderserver, welche von der Beacon-Infrastruktur regelmäßig über den Ort und den Zeitpunkt, an dem sich die Beacon an dem jeweiligen Ort befinden, informiert werden. Insgesamt ergibt sich somit ein sehr kostengünstiges, einfaches, jedoch zuverlässiges und überregional verwendbares Ortungssystem. Dieses Ortungssystem kann von gänzlich unterschiedlichen Anwendern (Paketdiensten, Logistik-Unternehmen, Suchdiensten von verlorenen oder gestohlenen Gegenständen, etc.) genutzt werden. Es kann auch zur Sicherung von Gegenständen verwendet werden, die mit ihrem Beacon in den Empfangsbereich eines bestimmten Transponders angeordnet und dort registriert werden. Zum Entfernen der Gegenstände ist dann eine Autorisierung notwendig, ansonsten wird ein Alarm oder ein zum Auffinden des Gegenstandes geeigneter Prozess ausgelöst.

### Bezugszeichen:

1 Beacon
2 Beacon-Server
3 Bedienercomputer
4 Datenverbindung
5 Transponder
6 Datenverbindung
7 Sicherheitsdienstcomputer
8 Ermittlungsbehördencomputer
9 Mikroprozessor
10 Arbeitsspeicher
11 nicht-flüchtiger, beschreibbarer Speicher
12 nicht-flüchtiger Speicher
13 Modulator/Demodulator
14 Sende-/Empfangseinrichtung
15 Antenne
16 Uhr
17 Schnittstelle
18 Schlafmodul
19 Umschlagsplatz
20 Straße
21 Paketabgabestelle
22 Straße
23 Internet
24 Anwendungsserver
25 Lastwagen
26 Funkverbindung
27 Telekommunikationsstation

## Patentansprüche

1. Ortungssystem, umfassend
einen Beacon-Server (2) und ein oder mehrere Transponder (5), die einen Empfänger aufweisen, der ein von einem aktiven Beacon (1) gesendetes Beacon-Funksignal empfangen kann, wobei die Transponder (5) zum Empfangen eines Beacon-Funksignals, zum Extrahieren eines für den aktiven Beacon (1) charakteristischen Beacon-Codes aus dem Funksignal und zum Übermitteln des Beacon-Codes über eine Datenverbindung (6) an den Beacon-Server (2) ausgebildet sind, und
der Beacon-Server (2) zum Überprüfen des von einem der Transponder (5) übermittelten Beacon-Codes ausgebildet ist, wobei am Beacon-Server (2) eine oder mehrere Beacon-Listen gespeichert sind, welche zu überwachende Beacon-Codes enthalten, wobei einer jeden Beacon-Liste zumindest eine Sucher-Adresse zugeordnet ist, an welche automatisch eine Nachricht übermittelt wird, wenn ein in der jeweiligen Liste enthaltener Beacon-Code erfasst worden ist, wobei die Nachricht eine Ortsangabe und/oder Zeitangabe und den Beacon-Code enthält, und die Nachricht vorzugsweise keine Information zu einem Gegenstand enthält, an oder in dem der jeweilige Beacon angeordnet ist.

2. Ortungssystem nach Anspruch 1,
**dadurch gekennzeichnet,**
**dass** das Ortungssystem eine Vielzahl von Beacon-Server (2) umfasst, welchen jeweils ein oder mehrere Transponder (5) zugeordnet sind, wobei die Beacon-Server (2) dazu ausgebildet sind, mit einem oder mehreren Anwendungsserver zu kommunizieren, an welchen der jeweilige Beacon-Code einer Beschreibung eines zu überwachenden Gegenstandes zugeordnet ist.

3. Ortungssystem nach Anspruch 1 oder 2,
**dadurch gekennzeichnet, dass**
der Beacon-Server (2) dazu ausgebildet ist, nach dem Feststellen, dass der übermittelte Beacon-Code ein gesuchter Beacon-Code ist, auf eine vom Sucher erteilte Freigabe Kontaktinformationen des Suchers an ein Mobilgerät zu übermitteln, das als Transponder (5) fungiert und den gesuchten Beacon-Code erfasst hat oder das sich in der Nähe des Transponders (5) befindet, der den Beacon-Code erfasst hat.

4. Ortungssystem nach einem der Ansprüche 1 bis 3,
**dadurch gekennzeichnet,**
**dass** die der Nachricht hinzugefügte Ortsangabe mittels eines im Transponder (5) befindlichen Ortungssensors und/oder mittels einer Funkortung des Mobilgeräts (5) ermittelt wird und/oder aus einem Speicher eines ortsfesten Transponders (5) ausgelesen wird, und/oder
**dass** der Beacon-Server (2) dazu ausgebildet ist, die Kontaktinformationen nach dem Empfang einer Freigabenachricht des Suchers zu übermitteln, und/oder
**dass** der Beacon-Server (2) dazu ausgebildet ist, die vorab auf dem Beacon-Server (2) zusammen mit der Freigabe gespeicherten Kontaktinformationen nach Erhalt eines gesuchten Beacon-Codes zu übermitteln.

5. Ortungssystem nach einem der Ansprüche 1 bis 5,
**dadurch gekennzeichnet, dass**
ein Bedienercomputer (3), an dem der Beacon-Code des Beacons (1) gespeichert ist, mit dem Beacon-Server (2) über eine Datenverbindung (4) verbunden und der Bedienercomputer (3) dazu ausgebildet ist, den gespeicherten Beacon-Code als einen gesuchten Beacon-Code zusammen mit einer elektronischen Sucheradresse und/oder der Kontaktinformationen und/oder der Freigabeinformation an den Beacon-Server (2) zu übermitteln.

6. Ortungssystem nach Anspruch 5,
**dadurch gekennzeichnet, dass**
der Bedienercomputer (3) ein stationärer Computer oder ein mobiles Gerät, insbesondere ein Tabletcomputer, ein Smartphone oder eine Smartwatch, ist.

7. Ortungssystem nach einem der Ansprüche 1 bis 6,
**dadurch gekennzeichnet, dass**
das Mobilgerät (5) ein Tabletcomputer, ein Smartphone oder eine Smartwatch ist, und/oder
dass die Empfänger der Transponder (5) dazu ausgebildet sind, Beacon-Funksignale gemäß dem ZigBee-Standard, dem Bluetooth-Standard, und/oder gemäß dem Bluetooth LE-Standard, zu empfangen, und/oder
dass zumindest einer der Transponder (5) zumindest zwei Empfang-/Sendeeinrichtungen zum Kommunizieren mit einem passiven Beacon und zum Kommunizieren mit einem aktiven Beacon aufweist.

8. Verfahren zur Ortung eines Beacons, insbesondere unter Verwendung eines Ortungssystems nach einem der Ansprüche 1 bis 7, umfassend die Schritte
- Empfangen eines einen Beacon-Code enthaltenden Funksignals von zumindest einem Beacon (1),
- Extrahieren des Beacon-Codes aus dem Funksignal an einem Transponder (5),
- Übermitteln des extrahierten Beacon-Codes vom Transponder (5) an einen Beacon-Server (2),
- Bestimmen am Beacon-Server (2), ob der übermittelte Beacon-Code einem zu überwachenden Beacon-Code eines Suchers entspricht, und
- wenn dieses der Fall ist, Auslesen einer zuvor gespeicherten und mit dem zu suchenden Beacon-Code verknüpften Sucher-Adresse am Beacon-Server (2) und Übermitteln einer Nachricht vom Beacon-Server (2), dass der Beacon-Code erfasst wurde, an den Sucher.

9. Verfahren nach Anspruch 8,
**dadurch gekennzeichnet, dass**
der Beacon-Server (2), nachdem er einen erfassten Beacon-Code als zu suchenden Beacon-Code bestimmt hat, vom das Beacon (1) erfassenden Transponder (5) dessen Standort als Ortsangabe anfordert und
der Beacon-Server (2) nach Empfang der Ortsangabe diese zusammen mit der Nachricht, dass der Beacon-Code erfasst wurde, an den Sucher übermittelt.

10. Verfahren nach einem der Ansprüche 8 oder 9,
**dadurch gekennzeichnet, dass**
der Beacon-Server (2) Kontaktinformationen des Suchers nach dem Empfang einer Freigabenachricht des Suchers an den Transponder, welcher den Beacon erfasst hat, oder an ein Endgerät, das mit diesem Transponder kommuniziert und sich somit in der Nähe dieses Transponders (5) befindet, übermittelt, oder dass
der Beacon-Server (2) die vorab auf dem Beacon-Server (2) zusammen mit der Freigabe gespeicherten Kontaktinformationen nach Erhalt des gesuchten Beacon-Codes übermittelt.

11. Verfahren nach einem der Ansprüche 8 bis 10,
**dadurch gekennzeichnet, dass**
der Beacon-Server (2) an eine Ermittlungsbehörde, an einen Sicherheitsdienst und/oder (Haus-)Detekteien eine Nachricht, dass der Beacon-Code erfasst wurde, zusammen mit dem Standort und/oderzusammen mit der Kontaktinformation des das Beacon (1) erfassenden Mobilgeräts (5) nach Freigabe des Nutzers des erfassenden Mobilgeräts (5) übermittelt.

12. Verfahren nach einem der Ansprüche 8 bis 11,
**dadurch gekennzeichnet, dass**
der Austausch von Informationen zwischen den beteiligten Kommunikationspartnern, wie Beacon (1), Beacon-Server (2), Bedienercomputer (3), Mobilgerät (5), Ermittlungsbehörde, Sicherheitsdienst, Hausdetektei, Sucher, automatisch und/oder verschlüsselt und/oder nur nach vorheriger Nutzer-Authentifikation geschieht.

13. Verfahren zur Ortung eines Beacons in dessen Nahfeldbereich, insbesondere nach einem der Ansprüche 8 bis 12, umfassend die Schritte
- Empfangen eines einen Beacon-Code enthaltenden Funksignals von zumindest einem Beacon (1),
- Extrahieren des Beacon-Codes aus dem Funksignal an einem Transponder (5),
- Ermitteln der Entfernung und/oder der Richtung zum Beacon (1) anhand des empfangenen Funksignals,
- Überprüfen des extrahierten Beacon-Codes am Transponder (5), ob der übermittelte Beacon-Code einem zu suchenden Beacon-Code eines gesuchten Beacons (1) entspricht, und
- Berechnen des Standorts des Beacons (1) relativ zum Transponder (5).

14. Verfahren nach Anspruch 13,
**dadurch gekennzeichnet, dass**
zumindest zwei Transponder (5) eine gemeinsame Suche nach einem bestimmten Beacon vereinbaren,
die zumindest zwei Transponder (5) für ein an einem Sendezeitpunkt ausgestrahltes Funksignal des Beacons (1) die Entfernung und/oder Richtung zum Beacon (1) ermitteln,
die zumindest zwei Transponder (5) korreliert mit dem Sendezeitpunkt die relative Position zueinander bestimmen,
an zumindest einem der Transponder (5) die ermittelten Messwerte und relativen Positionsdaten übermittelt werden, und
an zumindest dem einen Transponder (5) aus den übermittelten Messwerten und relativen Positionsdaten die relative Position des Beacons (1), die Entfernung und/oder die Richtung zum Beacon (1) bestimmt wird.

15. Verfahren nach einem der Ansprüche 13 oder 14,
**dadurch gekennzeichnet, dass**
das Ermitteln der Entfernung zwischen den Transpondern (5) und dem Beacon (1)mittels einer Feldstärkemessung und/oder einer Laufzeitmessung der Funksignale des Beacons (1) erfolgt, und/oder dass
das Ermitteln der Entfernung zwischen den zumindest zwei Transpondern (5) mittels einer Feldstärkemessung und/oder einer Laufzeitmessung von Funksignalenzwischen den Transpondern (5) und/oder einer Positionsbestimmung der Transponder (5) mit Hilfe eines Ortungssensors, insbesondere eines Satelliten- und/oder Funk-gestützten Ortungssensors, erfolgt, und/oder dass
die relative Position durch Ermitteln der absoluten Position bestimmt wird, und/oder dass der zeitliche und/oder örtliche Verlauf der Messwerte gespeichert und in die Positions-, Entfernungs- und/oder Richtungsberechnung mit einbezogen wird, und/oder dass an zumindest einem der Transponder (5) für das Beacon (1) Position, Entfernung und/oder Richtung zum Beacon (1) an einer Anzeigeeinrichtung angezeigt wird, insbesondere unter Berücksichtigung der Orientierung und der Lage im Raum des Transponders (5) relativ zum Beacon (1).
